# EUROPÄISCHE PATENTANMELDUNG

(11) **EP 1 184 339 A2**
(43) Veröffentlichungstag der Anmeldung: **06.03.2002**
(21) Anmeldenummer: 00250447.0
(22) Anmeldetag: 21.12.2000
(51) Int. Cl.: C01G 5/00, C01D 3/10, C01D 3/12, C01D 17/00, C01G 15/00, C03B 37/012, C03B 37/023, G02B 6/24, G02B 6/22

(54) **Optische Faser und Herstellungsverfahren für eine optische Faser**

(30) Priorität: 01.09.2000 EP 00250290
(71) Anmelder: A.R.T.-Photonics GmbH, 12489 Berlin (DE)
(72) Erfinder: Artiouchenko, Viatcheslav, 12107 Berlin (DE)
(74) Vertreter: Eisenführ, Speiser & Partner

(57) **Zusammenfassung**

Die Erfindung betrifft ein Verfahren zum Herstellen eines metallhalogenidhaltigen Ausgangsmaterials für eine optische Faser, wobei das Ausgangsmaterial einen vorbestimmten Brechungsindex aufweist, mit den Schritten:
- Mischen halogenhaltiger Gase zu einem Gasgemisch mit einem Partialdruckverhältnis, das vom vorbestimmten Brechungsindex des Ausgangsmaterials abhängt,
- Herbeiführen einer chemischen Reaktion des Gasgemisches mit einem Metall zu mindestens einem Reaktionsprodukt bei einer ersten Temperatur oberhalb der Schmelztemperatur des Reaktionsproduktes und
- Abkühlen des Reaktionsproduktes auf eine zweite Temperatur unterhalb der Schmelztemperatur.

## Beschreibung

Die Erfindung betrifft eine optische Faser und ein Herstellungsverfahren für eine optische Faser.

Für die Strahlungsleitung mit optischen Fasern im mittleren infraroten Spektralbereich, der den Wellenlängenbereich zwischen etwa 4 und 18 Mikrometern abdeckt, werden überwiegend Metallhalogenide verwendet. Hierbei handelt es sich in der Regel um polykristalline Materialien.

Bekannte Fasern weisen hohe Streuverluste aufgrund relativ grober Struktur und zahlreicher Verunreinigungen und eine geringe mechanische Belastbarkeit der Fasern auf.

Der Erfindung liegt die Aufgabe zugrunde, ein Verfahren zur Herstellung einer optischen Faser anzugeben, mit dem sich eine hohe Produktqualität möglichst zuverlässig erzielen lässt. Weiterhin ist es Aufgabe der Erfindung, eine optische Faser mit möglichst guten Lichtleiteigenschaften insbesondere im mittleren infraroten Sprektralbereich anzugeben.

Hinsichtlich des Verfahrensaspektes wird die Aufgabe zum einen gelöst durch ein Verfahren zum Herstellen eines metallhalogenidhaltigen Ausgangsmaterials mit bestimmtem Brechungsindex für eine optische Faser, mit den Schritten:
- Mischen halogenhaltiger Gase zu einem Gasgemisch mit einem Partialdruckverhältnis, das vom Brechungsindex des Ausgangsmaterials abhängt,
- Herbeiführen einer chemischen Reaktion des Gasgemisches mit einem Metall zu mindestens einem Reaktionsprodukt bei einer ersten Temperatur oberhalb der Schmelztemperatur des Reaktionsproduktes und
- Abkühlen des Reaktionsproduktes auf eine zweite Temperatur unterhalb der Schmelztemperatur.

Erfindungsgemäß werden halogenhaltige Gase zunächst gemischt. Anschließend wird eine direkte chemische Reaktion zwischen den Halogenteilchen und einem Metall oder einer Metallmischung herbeigeführt.

Das Mischungsverhältnis der halogenhaltigen Gase wird entsprechend dem gewünschten Brechungsindex des herzustellenden, metallhalogenidhaltigen Ausgangsmaterials gewählt. Mit dem erfindungsgemäßen Verfahren können aufgrund des einstellbaren Mischungsverhältnisses der halogenhaltigen Gase innerhalb eines durch die jeweils reinen Metallhalogenide vorgegebenen Werteintervalls beliebige Brechungsindizes eingestellt werden.

So hat beispielsweise Silberhalogenid im Spektralbereich zwischen 4 und 14 Mikrometern einen Brechungsindex von ca. 2.

Vorzugsweise wird das richtige Mischungsverhältnis durch Einstellung der Partialdrücke der zum Einsatz kommenden halogenhaltigen Gase erzielt. Das Partialdruckverhältnis kann beispielsweise durch eine entsprechende Steuerung der Öffnung von Gasventilen am Ausgang von Gasbehältern eingestellt werden, die jeweils eines der halogenhaltigen Gase beinhalten. Alternativ kann im Produktionsprozess eine einzelne Gasquelle verwendet werden, in der die halogenhaltigen Gase schon im erforderlichen Mischungsverhältnis vorliegen.

Das richtige Partialdruckverältnis wird in Abhängigkeit vom gewünschten Brechungsindex entsprechend den Randbedingungen der herbeizuführenden chemischen Reaktionen eingestellt. Hier können insbesondere die an der Reakation beteiligten Halogene, das bzw. die an der Reaktion beteiligte Metall bwz. Metalle, die Reaktionstemperatur und die Reaktionsatmosphäre (beispielsweise Inertgas oder Vakuum) die Einstellung des Partialdruckverhältnisses beeinflussen.

Das erfindungsgemäße Verfahren überwindet die bei bekannten Herstellungsverfahren bestehende Beschränkung des Mischungsverhältnisses von Metallhalogeniden im Ausgangsmaterial auf ein stark beschränktes Werteintervall.

Bei einer Ausführungsform der Erfindung wird die Reaktion der Halogenteilchen mit dem Metall oder der Metallmischung im Vakuum herbeigeführt. Alternativ kann die chemische Reaktion in einer inerten Gasatmosphäre stattfinden.

In einer bevorzugten Ausführungsform ist das erfindungsgemäße Verfahrens zum Herstellen einer festen Lösung von Metallhalogeniden ausgebildet.

Als Metall werden vorzugsweise Alkalimetalle, insbesondere Kalium, Natrium oder Caesium, Rubidium oder Thallium (TI) oder Silber verwendet.

Als halogenhaltigen Gase werden in verschiedenen Ausführungsbeispielen einzeln oder in Kombination bevorzugt bromhaltige, iodhaltige oder chlorhaltige Gase verwendet. Bevorzugt werden Halogengase mit besonders hoher Reinheit verwendet. Hierfür können kommerziell erhältliche hochreine Halogengase eingesetzt werden oder im Herstellungsverfahren selbst entsprechend ausgebildete Reinigungsschritte vorgeschaltet werden.

Das erfindungsgemäße Verfahren eignet sich insbesondere zur Herstellung einer festen Lösung von AgBrₓCl₁₋ₓ über den gesamten Bereich des Mischungsverhältnisses, d.h.0 ≤ x ≤ 1. Dieses Ausgangsmaterial für optische Fasern kann mit dem erfindungsgemäßen Verfahren mit besonders hoher mechanischer Robustheit und optischer Qualität hergestellt werden.

Das Partialdruckverhältins wird in einer weiteren Ausführungsform der Erfindung so eingestellt, dass die feste Lösung Brom und Chlor in einem Teilchenzahl-Verhältnis von 3 zu 1 enthält. Bei diesem Verhältnis ist die Mikrostruktur der polykristallinen festen Lösung besonders homogen. Dadurch wird die Lichtstreuung in der Faser minimiert.

Das Metall wird bei einer weiteren Ausführungsform des erfindungsgemäßen Verfahrens vor dem Herbeiführen der chemischen Reaktion mit den Halogenen in einem zusätzlichen Schritt elektrolytisch gereinigt.

Zur Herstellung besonders reinen Ausgangsmaterials für optische Fasern wird das flüssige Reaktionsprodukt vor dem Schritt des Abkühlens auf eine Temperatur unterhalb des Schmelzpunktes durch eine Reinigungsstufe geleitet. Es können auch mehrere Reinigungsstufen hintereinander vorgesehen sein. Die Reinigung erfolgt beispielsweise, indem das flüssige Reaktionsprodukt durch Kapillaren geleitet wird.

Ein zusätzlicher Reinigungseffekt wird in einem Ausführungsbeispiels erzielt, in dem das Reaktionsprodukt beim Abkühlen von der ersten Temperatur auf die zweite Temperatur in einem Ofen entlang eines Temperaturgradienten bewegt wird. Ein Temperaturgradient kann beispielsweise in einem Reaktor mit einem länglichen Ofen eingestellt werden, in dem entlang seiner Längserstreckung separat steuerbare Heizelemente vorgesehen sind. So kann das Reaktionsprodukt nach und nach abgekühlt werden, wobei die Kristallisationsfront ortsfest ist. Die Kristallisationsfront ist der Bereich innerhalb des Reaktors, in dem das Reaktionsprodukt die Schmelztemperatur unterschreitet und kristallisiert.

Ein weiterer selbständig schutzwürdiger Erfindungsgedanke betrifft ein Verfahren zum Herstellen eines Rohlings für optische Fasern, mit den Schritten
- Bereitstellen eines Bades mit flüssigem Ausgangsmaterial,
- Rotieren eines teilweise in das Bad eingetauchten, festen Kerns derart, dass sich eine dünne Schicht des Ausgangsmaterials auf der Umfangsfläche des Kerns derart anlagert und dort kristallisiert, dass der feste Kern während des Rotierens in radialer Richtung wächst.

Bei dem erfindungsgemäßen Verfahren wird zunächst ein Bad mit flüssigem Ausgangsmaterial bereit gestellt. Dies kann beispielsweise unter Verwendung von Verfahrensschritten aus dem oben beschriebenen Verfahren erfolgen, d.h.
- Mischen halogenhaltiger Gase zu einem Gasgemisch mit einem Partialdruckverhältnis, das vom Brechungsindex des Ausgangsmaterials abhängig ist,
- Herbeiführen einer chemischen Reaktion des Gasgemisches mit einem Metall zu mindestens einem Reaktionsprodukt bei einer ersten Temperatur oberhalb der Schmelztemperatur des Reaktionsproduktes.

Das flüssige Reaktionsprodukt wird anschließend in einem Bad gesammelt und dort auf einer Temperatur oberhalb des Schmelzpunktes gehalten. Hierzu können beispielsweise Heizelemente in die Wandungen eines Gefäßes, in dem sich das Bad befindet, eingebaut sein.

Grundsätzlich sind jedoch auch andere bekannte Verfahren zur Herstellung flüssigen Ausgangsmaterials einsetzbar.

Es kann während der anschließenden Verfahrensschritte flüssiges Ausgangsmaterial kontinuierlich oder schrittweise dosiert nachgefüllt werden. Wird ein zweites Ausgangsmaterial nachgefüllt, so ändert sich der Brechungsindex des kristallisierenden Materials entsprechend der Konzentration des zweiten Ausgangsmaterials. Auf diese Weise kann in radialer Richtung ein Brechungsindexgradient erzeugt werden.

Unabhängig davon, ob das nachgefüllte Ausgangsmaterial während des Herstellungsprozesses das gleiche bleibt oder ob ein anderes Ausgangsmaterial nachgefüllt wird, sowie unabhängig davon, ob das Nachfüllen kontinuierlich oder in separaten Chargen erfolgt weist eine bevorzugte Ausführungsform Mittel zum Homogenisieren des flüssigen Ausgangsmaterials in dem Bad auf. Diese Homogenisierungsmittel können beispielsweise so ausgebildet sein, daß sie das Bad regelmäßig oder unregelmäßig in Schwingungen versetzen. So ist vorzugsweise ein piezoelektrischer Schwingungsgenerator vorgesehen, der mit einer Wanne für das Bad flüssigen Ausgangsmaterials verbunden ist. Alternativ oder zusätzlich dazu können längs des Bades Gasleitungen vorgesehen sein, die über ihre Länge gleichmäßig verteilt Öffnungen aufweisen, aus denen Gas austreten kann. Die in dem Bad aufsteigenden Gasbläschen bewegen das flüssige Ausgangsmaterial und durchmischen es auf diese Weise.

Bei dem erfindungsgemäßen Verfahren wird anschließend ein fester Kern teilweise in das Bad eingetaucht. Der Kern besteht beispielsweise aus demselben Material wie das Bad. Auf diese Weise kann ein homogener Rohling hergestellt werden.

Denkbar ist auch, einen Kern zu verwenden, der nur auf seiner Umfangsfläche das Material des Bades aufweist und einen Innenkern aus einem zweiten Material enthält. Auf diese Weise kann durch anschließendes Entfernen des Innenkerns ein Rohling mit der Form eines Hohlzylinders hergestellt werden.

Schließlich kann der Kern auch vollständig aus einem anderen Material als das Bad bestehen. Auf diese Weise kann beispielsweise durch Kristallisation von Material des Bades auf dem Kern ein Rohling mit einem Kern und einem Mantel (Cladding) hergestellt werden. Kern und Mantel weisen vorzugsweise unterschiedliche optische Eigenschaften auf.

Es kann beispielsweise ein Kern verwendet werden, der aus einer festen Lösung von AgBr und AgCI mit einem ersten Mischungsverhältnis besteht. Durch Kristallisation von flüssigem Ausgangsmaterial, das ein anderes Mischungsverhältnis aufweist als das des Kerns, entsteht ein Rohling mit einer beispielsweise zylindrischen Form, dessen Kern und Mantel einen unterschiedlichen Brechungsindex aufweisen.

Das Rotieren des Kerns erfolgt derart, dass sich eine dünne Schicht des Ausgangsmaterials auf der Umfangsfläche des Kerns anlagert und dort kristallisiert. Die Kristallisation erfolgt durch Abkühlen des an der Umfangsfläche anhaftenden flüssigen Materials im Kontakt mit einer inerten Gasatmosphäre oder im Vakuum nach dem Wiederauftauchen aus dem Bad.

Die Rotationsgeschwindigkeit des Kerns wird so eingestellt, dass ein Optimum einerseits hinsichtlich der Wachstumsgeschwindigkeit und andererseits hinsichtlich der Kristallqualität erreicht wird. Das aufgewachsene Material sollte eine homogene Mikrostruktur aufweisen und nur geringe Streuverluste verursachen.

Das Wachstum auf der Umfangsfläche erfolgt, im Ganzen gesehen, in radialer Richtung, das heißt, senkrecht zur Rotationsachse. Dies schließt natürlich nicht aus, dass im einzelnen eine Kristallbindung von anhaftenden Teilchen auch an in Umfangsrichtung benachbarte, zuvor kristallisierte Bereiche erfolgt.

Je nach Temperatur von Bad und Reaktoratmosphöre kann das Kristallisieren von anhaftendem flüssigen Material unmittelbar nach dem Auftauchen aus dem Bad erfolgen oder zu einem späteren Zeitpunkt vor dem nächsten Wiedereintauchen in das Bad.

Das erfindungsgemäße Verfahren eignet sich besonders zum Herstellen zylinderförmiger Rohlinge für optische Fasern. Grundsätzlich können aber auch andere geometrische Formen realisiert werden. Beispielsweise kann durch Infrarotlicht-Einstrahlung auf begrenzte Abschnitte der Oberfläche längs der Drehachse des wachsenden Rohlings außerhalb des Bades die Kristallisation in diesen Bereichen verhindert werden. Auf diese Weise wird längs der Drehachse ein inhomogenes Kristallewachstum in radialer Richtung erzeugt. Durch gezielte Einstrahlung, beispielsweise unter Verwendung entsprechend eingerichteter Abbildungsoptiken für das eingestrahlte Infrarotlicht, können grundsätzlich Rohlinge mit beliebiger geometrischer Form realisiert werden. Ist die Bestrahlung zeitlich konstant, so hat die Form Zylindersymmetrie, wird die Bestrahlung zeitlich variiert, so können auch andere Formen realisiert werden.

Bei einem Ausführungsbeispiel der Erfindung wird das flüssige Ausgangsmaterial in dem Bad während des Rotierens des Kerns durch ein Ausgangsmaterial für einen anderen Brechungsindex ausgetauscht. Auf diese Weise können Rohlinge mit einer Abfolge unterschiedlicher Materialschichten in radialer Richtung hergestellt werden.

Beispielsweise können Schichten mit unterschiedlichem Brechungsindex in radialer Richtung aufeinander folgen. Die Materialschichten weisen bei diesem Ausführungsbeispiel relativ scharfe Grenzen auf, so dass der Brechungsindex sich in radialer Richtung stufenartig ändert.

Eine kontinuierliche Variation der Materialeigenschaften kann durch einen kontinuierlichen Austausch flüssigen Ausgangsmaterials in dem Bad während des Rotierens des Kerns erzielt werden. So ist es beispielsweise möglich, die Konzentration von AgBr in einem AgCI Bad durch Zufluss von reinem AgBr kontinuierlich zu erhöhen. Anstelle reinen AgBr kann auch eine flüssige AgBr/AgCl-Lösung mit relativ zum Bad höherer Konzentration von AgBr verwendet werden.

Für die Herstellung zylinderförmiger Rohlinge wird das Verfahren so durchgeführt, dass die Rotationsachse stets parallel zur Oberfläche des flüssigen Ausgangsmaterials verläuft.

Vorzugsweise wird der Abstand zwischen der Rotationsachse und der Oberfläche des flüssigen Ausgangsmaterials kontinuierlich vergrößert. Dies erfolgt mit der Maßgabe, dass die Eintauchtiefe des wachsenden Rohlings während des Wachstums konstant bleibt. Auf diese Weise wird gewährleistet, dass stets konstante Wachstumsparameter herrschen.

Ein weiterer, selbständig schutzwürdiger Erfindungsgedanke betrifft ein Verfahren zum Herstellen eines Rohlings für optische Fasern, das die folgenden Schritte aufweist:
- Leiten mindestens eines flüssigen Ausgangsmaterials durch mindestens zwei Röhren unterschiedlichen Durchmessers, wobei eine erste Röhre mindestens eine zweite Röhre umgibt,
- Kontinuierliches Zusammenführen des Ausgangsmaterials nahe der Mündungsöffnung der zweiten Röhre in einer Diffusionszone und
- Überführen des Materials in der Diffusionszone in die feste Phase.

Dieses erfindungsgemäße Verfahren eignet sich insbesondere für die Herstellung von Rohlingen für polykristalline optische Fasern, die im Querschnittprofil mehrere Abschnitte mit unterschiedlichen Eigenschaften aufweisen. Dies wird dadurch bewirkt, dass bei der Herstellung eines Rohlings unterschiedliche flüssige Ausgangsmaterialien durch unterschiedliche Röhren geleitet werden. Die erste Röhre entspricht mit ihren Innenmaßen den Außenmaßen des entstehenden Rohlings. Sie kann ein geschlossenes Ende aufweisen. Die zweite Röhre verläuft in der ersten Röhre und mündet in die erste Röhre. Erst durch den Austritt des Ausgangsmaterials aus der zweiten Röhre im Mündungsbereich werden die flüssigen Ausgangsmaterialien der ersten und der zweiten Röhre zusammengeführt. Anschließend werden sie in die feste Phase überführt. Auf diese Weise entsteht ein Rohling, dessen Querschnitt einen Abschnitt mit Ausmaßen entsprechend etwa dem Querschnitt der zweiten Röhre aufweist. Dieser Abschnitt kann aus einem Material gefertigt sein, das sich zumindest im Brechungsindex von dem über die erste Röhre zugeführten Material unterscheidet.

Nahe der Mündung der zweiten Röhre in die erste grenzen das erste und das zweite flüssige Ausgangsmaterial unmittelbar aneinander. Es bildet sich eine Diffusionszone aus. Dort findet eine Durchmischung der flüssigen Ausgangsmaterialien statt, überwiegend oder ausschließlich unter Ausnutzung der Diffusion. Die Kontrolle über die stattfindende Durchmischung ist umso besser, je größer der Anteil der Diffusion an der Durchmischung der Ausgangsmaterialien ist.

Die Diffusionszone erstreckt sich innerhalb der ersten Röhre in Längsrichtung von der Mündung der zweiten Röhre bis zu einer Kristallisationsfront, deren genaue Lage abhängig ist von dem Ort, wo die Temperatur die Schmelztemperatur unterschreitet. Dieser Ort ist als Prozessparameter voreinstellbar.

Die Kristallisationsfront ist die Grenzfläche zwischen der flüssigen und der festen Phase. Die Form der Grenzfläche ist abhängig von der Temperaturverteilung in den Querschnittsebenen der ersten Röhre. Weiterhin ist die Form der Grenzfläche bei einem Gemisch zweier Ausgangmaterialien abhängig von der Konzentration der einzelnen Ausgangmaterialien, da die unterschiedlichen Ausgangsmaterialien in aller Regel eine unterschiedliche Schmelztemperatur haben.

Der Grad der Durchmischung der über die erste und zweite Röhre zugeführten Ausgangsmaterialien ist zum einen selbstverständlich abhängig von den verwendeten Materialien. Die Interdiffusion zweier flüssiger Ausgangsmaterialien wird durch die physikalische Eigenschaften der beiden Flüssigkeiten beherrscht.

Die Durchmischung der flüssigen Ausgangsmaterialien kann jedoch zum anderen durch die Prozessführung gezielt beeinflußt werden. Beispielsweise hängt der Grad der Durchmischung der unterschiedlichen Materialien von der Dauer der Durchmischung ab. Durch ein schnelles Herbeiführen der Kristallisation im Anschluss an das Austreten flüssigen Ausgangsmaterials aus der zweiten Röhre wird die Diffusion frühzeitig gestoppt. Auf diese Weise entstehen relativ abrupte Materialgrenzen längs des Querschnitts. Bei einem zylinderförmigen Faserrohling können auf diese Weise beispielsweise in radialer Richtung stufenförmige Brechungsindexverläufe realisiert werden.

Wird dagegen die Diffusion über eine längere Zeitspanne zugelassen, indem die Materialien in der Diffusionszone auf einer Temperatur oberhalb des Schmelzpunktes gehalten werden, so entsteht eine relativ ausgedehnte Diffusionszone. Auf diese Weise kann ein Faserrohling mit einem Brechungsindexprofil im Querschnitt realisiert werden, das einen oder auch mehrere Abschnitte einer allmählichen, stufenlosen Zu- oder Abnahme des Brechungsindizes aufweist. Die Steigung, das heißt, der Grad der Zu- oder Abnahme des Brechungsindizes, kann mit dem erfindungsgemäßen Verfahren präzise vorbestimmt werden. Hierzu ist neben den Brechungsindizes der Ausgangsmaterialien lediglich die Ausdehnung der Diffusionszone in der Querschnittsebene als Randbedingung festzulegen.

Zur Realisierung einer Diffusionszone bestimmter Ausdehnung im Querschnittsprofil kann neben der Diffusionsdauer die Wandstärke der zweiten Röhre als Steuerparameter geeignet sein. Als Beispiel sei ein zylinderförmiger Rohling betrachtet. Die Ausdehnung der Diffusionszone in radialer Richtung kann nicht nur durch die Diffusionsdauer, sondern auch durch eine gezielte Auswahl der Dicke der Wandung der zweiten Röhre beeinflusst werden. Eine dickere Wandung vergrößert im Querschnittsprofil des entstehenden Faserrohlings die Fläche des Bereiches, in dem sich die aus den beiden Röhren ausfließenden Ausgangsmaterialien durchmischen. Dabei ist jedoch zu berücksichtigen, dass unter ungünstigen Bedingungen eine inhomogene Durchmischung infolge unkontrollierter Strömungsverhältnisse im Mündungsbereich der Röhren auftreten kann.

Die Lage der Diffusionszone im Querschnittsprofil eines Faserrohlings kann durch entsprechende Anordnung der zweiten Röhre innerhalb der ersten Röhre vorbestimmt werden.

Je nach gewünschtem Querschnittsprofil des Faserrohlings, beispielsweise im Hinblick auf seinen Brechungsindex, können auch mehrere Röhren innerhalb der ersten Röhre angeordnet werden. So werden für ein W-förmiges Brechungsindexprofil eines zylinderförmigen Faserrohlungs neben der äußeren, ersten Röhre eine zweite und eine dritte Röhre verwendet. Die dritte Röhre verläuft in der zweiten Röhre und die zweite verläuft in der ersten Röhre. Die Röhren verlaufen konzentrisch. Durch die erste und dritte Röhre wird ein erstes flüssiges Ausgangsmaterial geleitet und durch die zweite Röhre ein zweites flüssiges Ausgangsmaterial. Das zweite Ausgangsmaterial hat in der festen Phase einen geringeren Brechungsindex als das erste Ausgangsmaterial.

Die Röhren müssen jedoch nicht konzentrisch angeordnet werden. Die Anordnung der zweiten, dritten, vierten etc. Röhre innerhalb der ersten Röhre richtet sich nach dem gewünschten Queschnittsprofil. Auf diese Weise lassen sich auch Fasern mit beispielsweise 3 nebeneinander verlaufenden Kernen erzeugen.

Neben dem Brechungsindexprofil des Faserrohlings können mit dem erfindungsgemäßen Verfahren auch andere physikalische Parameterprofile gezielt beeinflusst werden, so beispielsweise das Transmissionsprofil.

Selbstverständlich kann das erfindungsgemäße Verfahren jedoch auch zur Herstellung eines im Querschnitt homogenen Rohlings verwendet werden, indem durch alle Röhren dasselbe Material geleitet wird. Auch versteht sich, dass mit dem Verfahren Rohlinge unterschiedlichster Außenmaße und Formen angefertigt werden können. Neben einer zylindrischen Form können beispielsweise auch Rohlinge in Quaderform hergestellt werden. Es müssen nur entsprechend geformte Röhren verwendet werden. Auch können die erste und die zweite Röhre unterschiedliche Querschnittsformen aufweisen. Beispielsweise kann die erste Röhre die Form eines Hohlquaders haben und die zweite Röhre (zumindest im Bereich ihrer Mündung) hohlzylinderförmig sein.

Das erfindungsgemäße Verfahren eignet sich besonders für die Herstellung von Faserrohlingen aus Metallhalogeniden. Bevorzugt wird es für die Herstellung von Faserrohlingen verwendet, die das Materialsystem AgBr/AgCl in fester Lösung enthalten. Dabei können Bereiche mit unterschiedlichen Mischungsverhältnissen aneinandergrenzen. Das Mischungsverhältnis kann sich quer zur Längsachse des Faserrohlings abrupt oder allmählich ändern. Mit dem erfindungsgemäßen Verfahren ist es demzufolge möglich, auch im infraroten Spektralbereich zwischen 4 und 18 Mikrometern optische Fasern mit Indexprofilen herzustellen. Ein mit dem erfindungsgemäßen Verfahren hergestellter Faserrohling aus AgBr/AgCl weist eine besonders homogene Mikrostruktur auf.

Bei einer Ausführungsform des erfindungsgemäßen Verfahrens durchlaufen die Ausgangsmaterialien bis zum Zusammenführen in der Diffusionszone ein Temperaturprofil in Längsrichtung der Röhren derart, dass die Temperatur der Ausgangsmaterialien stromabwärts abnimmt und im Bereich der Mündung etwa die Schmelztemperatur erreicht. Das allmähliche Abkühlen der Ausgangsmaterialien fördert die Homogenität der Mikrostruktur des entstehenden Faserrohlings.

Bei einer bevorzugten Ausführungsform des erfindungsgemäßen Verfahren wird die erste Röhre relativ zur zweiten Röhre in Richtung abnehmeneder Temperaturen bewegt, um flüssiges Ausgangsmaterial in die feste Phase zu überführen.

Vorzugsweise erfolgt die Bewegung der ersten Röhre relativ zur zweiten Röhre derart, dass flüssiges Ausgangsmaterial stets in etwa gleichem Abstand von der Mündung der zweiten Röhre in die erste Röhre überführt wird. Dies kann beispielsweise dadurch realisiert werden, dass die erste Röhre in einem Ofen mit vorgegebenem Temperaturprofil in Längsrichtung bewegt wird. Das Temperaturprofil ist so eingerichtet, dass in einem vorgegebenem Abstand von der Mündung der zweiten Röhre in die erste Röhre die Schmelztemperatur unterschritten wird und mit zunehmendem Abstand weiter sinkt. Zugeführtes flüssiges Ausgangsmaterial aus der ersten und der zweiten Röhre kann aufgrund der Bewegung der ersten Röhre relativ zur zweiten in die Diffusionszone einströmen und geht anschließend, wenn es den vorgegebenen Abstand von der Mündung der zweiten Röhre erreicht hat, in die feste Phase über. Auf diese Weise wird der Transport kristallisierten Materials von der Kristallisationsfront weg gewährleistet, so dass ein kontinuierliches Wachstum des Rohlings gewährleistet ist. Die Länge des entstehenden Rohlings ist aufgrund dieser Verfahrensführung grundsätzlich nicht begrenzt.

Es versteht sich, dass anstelle der Bewegung der ersten Röhre auch zugleich das Temperaturprofil und die zweite Röhre in Längsrichtung verschoben werden können. Dadurch wird die gleiche Relativbewegung zwischen erster Röhre und zweiter Röhre sowie dem Temperaturprofil realisiert. Im folgenden wird diese Alternative der Klarheit der Darstellung halber jedoch nicht mehr extra erwähnt.

Die Geschwindigkeit der Relativbewegung von erster und zweiter Röhre hat wesentlichen Einfluss auf die Dauer der Diffusion an der Grenzfläche zwischen erstem und zweitem Ausgangsmaterial. Mit der Steuerung dieser Geschwindigkeit kann also das Querschnittsprofil der optischen Eigenschaften des entstehenden Rohlings beeinflußt werden. Wird das flüssige Material in der Diffusionszone mit relativ hoher Geschwindigkeit in Richtung der Kristallisationsfront bewegt, so ist die Diffusionszeitspanne kurz und der Übergangsbereich zwischen erstem und zweitem Ausgangsmaterial von geringer Ausdehnung. Es entsteht ein Querschnittsprofil des Brechungsindizes mit stufenförmigem Verlauf. Ist die Geschwindigkeit dagegen gering, ist die Ausdehnung des Übergangsbereiches größer und das Brechungsindexprofil hat annähernd lineare und/oder kurvenförmigen Abschnitte.

An dieser Stelle bietet sich eine weiterere Einflussmöglichkeit auf das sich ausbildende Querschnittsprofil des Faserrohlings an: der Verlauf des Brechungsindexprofils in den Übergangsbereichen zwischen unterschiedlichen Ausgangsmaterialien kann auch durch die Ausformung der Stirnfläche der Röhrenwandungen an der Mündungsöffnung beeinflusst werden. Wesentlich ist hier die Lage und Form der Stirnfläche der zweiten Röhre in Bezug zur Lage und Form der Kristallisationsfläche. Denn bei konstanter Geschwindigkeit der Bewegung der ersten Röhre bestimmt der Abstand zwischen der Stirnfläche der Röhre und der Kristallisationsfläche die Dauer der Diffusion. Variiert dieser Abstand in radialer Richtung über die Erstreckung der Wandung, so ist die Durchmischung der hier aneinandergrenzenden Ausgangsmaterialien abhängig von der radialen Position. Grundsätzlich können daher durch entsprechende Ausformung der Stirnfläche der zweiten Röhre im Übergangsbereich zwischen unterschiedlichen Materialien kurvenförmige oder lineare Indexverläufe realisiert werden.

Vorzugsweise wird das Verfahren mit Röhren durchgeführt, deren Stirnfläche parallel zur Kristallisationsfläche verläuft. Auf diese Weise wird die Diffusionsdauer vom Radius unabhängig gemacht. Es resultiert ein linearer Indexverlauf im Übergangsbereich.

Mit dem erfindungsgemäßen Verfahren können auch Rohlinge hergestellt werden, bei denen sich das Querschnittsprofil eines optischen Parameters in Längsrichtung des Rohlings ändert. In einem Ausführungsbeispiel wird das Brechungsindexprofil im Querschnitt eines zylinderförmigen Rohlings in Längsrichtung des Rohlings unterschiedlich ausgebildet. Dies erfolgt beispielsweise durch Veränderung der Vorschubgeschwindigkeit der ersten Röhre. Wie oben erläutert, wird dadurch die Ausdehnung des Übergangsbereiches zwischen aneinandergrenzenden Materialien verändert. Wird die Geschwindigkeit etwa im Verlaufe der Herstellung eines Rohlings erhöht, so nimmt die Ausdehnung des Übergangsbereiches im Querschnittsprofil ab. Auf diese Weise kann zum Beispiel ein Rohling gefertigt werden, der in einem Längsabschnitt einen linear veränderlichen Brechungsindex und in einem anderen Längsabschnitt einen stufenförmig veränderlichen Brechungsindex aufweist.

Ein weiterer, selbstständig schutzwürdiger Erfindungsgedanke betrifft eine Vorrichtung zur Herstellung eines Faserrohlings, umfassend mindestens zwei Röhren, von denen eine erste Röhre mindestens eine zweite Röhre zumindest im Bereich einer Stirnfläche der zweiten Röhre umgibt, und eine Heizvorrichtung, die zur Erzeugung eines Temperaturprofils in den Röhren ausgebildet ist, das in Längsrichtung der ersten Röhre veränderlich ist, wobei die genannte Stirnfläche einen Flächenabschnitt aufweist, dessen Oberflächennormale einen spitzen Winkel mit der Längsachse der zweiten Röhre bildet.

Die erfindungsgemäße Vorrichtung ist zur Durchführung des oben beschriebenen Verfahrens ausgebildet. Bei dieser Vorrichtung weist die zweite Röhre an dem Längsende, wo flüssiges Ausgangsmaterial in die erste Röhre mündet, eine Stirnfläche mit einem Flächenabschnitt auf, dessen Oberflächennormale einen spitzen Winkel mit der Längsachse der zweiten Röhre bildet.

Zur Erläuterung der Erfindung wird zunächst davon ausgegangen, dass bei der Herstellung von Faserrohlingen die Phasengrenzfläche zwischen dem flüssigen Ausgangsmaterial und dem festen Rohling durch entsprechende Einstellung des Temperaturprofils ortsfest gehalten wird. Dies ist leicht zu realisieren. Es kann beispielsweise die erste Röhre in einem von der Heizvorrichtung erzeugten ortsfesten Temperaturprofil bewegt werden. Auf diese Weise wird der Faserrohling in Längsrichtung wachsen zu lassen, indem zugeführtes Material nach und nach durch eine Zone abnehmender Temperatur bewegt wird. Es kristallisiert stets das flüssige Ausgangsmaterial, das gerade die Phasengrenzfläche, also den Ort der Längserstreckung der ersten Röhre passiert, an dem die Schmelztemperatur unterschritten wird. Im weiteren Verlauf wird dieses Material weiter abgekühlt.

Mit der erfindungsgemäßen Ausbildung der Stirnfläche wird erreicht, dass beim Betrieb der Vorrichtung die oben beschriebene Diffusionszone im Grenzbereich unterschiedlicher flüssiger Ausgangsmaterialien für einen Faserrohling eine Längserstreckung aufweist, die in Richtungen quer zur Längsachse der zweiten Röhre variiert. Die Längserstreckung der Diffusionszone ist ja der Abstand zwischen der Stirnfläche der zweiten Röhre und der Phasengrenzfläche. Daher ist die Zeitspanne, während der die Diffusion zwischen den aneinandergrenzenden Ausgangsmaterialien zugelassen wird, von der Position quer zur Längsachse abhängig. Das heißt, am Beispiel eines zylinderförmigen Faserrohlings beschrieben, die Diffusionszeitspanne ist abhängig vom radialen Abstand von der Längsachse der zweiten Röhre. Mit der Diffusionszeitspanne variiert aber zwangsläufig die Durchmischung der benachbarten Ausgangsmaterialien. Mit der Durchmischung wiederum variieren beispielsweise die optischen Eigenschaften. Hierzu wird auf das schon oben erwähnte Beispiel einer festen Lösung von AgBr/AgCl hingewiesen.

Mit der erfindungsgemäßen Vorrichtung kann demnach ein Faserrohling hergestellt werden, der allmähliche, lineare oder nichtlineare Übergänge des Brechungsindexprofils aufweist. Die Art des jeweiligen Übergangs kann durch Ausbildung der Stirnfläche beeinflusst werden.

Bei der bisherigen Darstellung wurde von einer ortsfesten Phasengrenze ausgegangen. Die Diffusionsdauer bei der erfindungsgemäßen Vorrichtung ist jedoch selbst dann vom radialen Abstand abhängig, wenn die Phasengrenzfläche zwischen Flüssigkeit und Kristall in Längsrichtung der ersten Röhre beweglich und nicht ortsfest ist. Jedoch ist in diesem Fall die Kontrolle über die Änderung des Mischungsverhältnisses in der Diffusionszone aufwändiger zu realisieren, da die Bewegung der Phasengrenze zusätzlich berücksichtigt werden muss.

Verschiedenste Ausbildungsformen der Stirnfläche der zweiten Röhre sind vorteilhaft. Denn grundsätzlich ist die spezielle Ausbildung der Stirnfläche abhängig vom gewünschten Querschnittsprofil des Brechungsindexes. Allen Ausbildungen ist gemeinsam, dass es einen Stirnflächenabschnitt gibt, dessen Oberflächennormale einen spitzen Winkel mit der Längsachse der zweiten Röhre bildet. Dieser Oberflächenabschnitt kann eben oder gekrümmt sein.

Bei einer bevorzugten Ausführungsform der erfindungsgemäßen Vorrichtung verläuft die Stirnfläche der zweiten Röhre parallel zu einer im Betrieb der Vorrichtung sich mit Abstand vor der Röhrenmündung bildenden Phasengrenzfläche zwischen einer flüssigen und einer festen Phase des Ausgangsmaterials. Bei dieser Ausführungsform ist die Diffusionszeitspanne demzufolge in radialer Richtung konstant. Demzufolge bildet kann sich ein besonders exakt vorhersagbares Brechungsindexprofil ausbilden, das je nach Diffusionsdauer steiler oder flacher verläuft.

Dabei ist die Stirnfläche in einem Ausführungsbeispiel gekrümmt ausgebildet. Eine gekrümmte Phasengrenzfläche tritt beispielsweise bei dem Entstehen einer festen Lösung von AgCl/AbBr mit in radialer Richtung variierender Chlor-Konzentration aus der Schmelze auf. Die Schmelztemperatur dieser Lösung ist annähernd linear von der Konzentration des Chlor in der Lösung abhängig. Bereich niedriger Chlorkonzentration haben daher einen geringeren Schmelzpunkt als Bereiche höherer Chlorkonzentration. In der Diffusionszone zwischen Bereiche unterschiedlicher Chlorkonzentration entsteht aufgrund der Diffusion ein Bereich mit in radialer Richtung veränderlicher Schmelztemperatur. Die variierende Schmelztemperatur lässt eine Phasengrenzfläche zwischen flüssigem und festem Silberhalogenid entstehen, die zum einen in radialer Richtung der Chlorkonzentration und zum anderen in Längsrichtung der ersten Röhre dem herrschenden Temperaturprofil folgt.

Bei eine weiteren Ausführungsform ist die Stirnfläche konvex gekrümmt. Eine konvexe Krümmung entspricht der Form der sich in der ersten Röhre ausbildenden Phasengrenzfläche, wenn das Material im Kern des entstehenden Faserrohlings eine geringere Schmelztemperatur hat als im Bereich des Claddings. Demzufolge wird bei umgekehrten Verhältnissen eine konkave Krümmung der Stirnfläche verwendet.

Die erste Röhre ist bei einem Ausführungsbeispiel längsverschieblich gelagert. Die Vorteile dieser Ausführungsform wurden oben anhand der Darstellung des Verfahrens eingehend erläutert.

Einen weiterer Aspekt der Erfindung mit eigenständiger Schutzwürdigkeit bildet ein Verfahren zum Herstellen einer optischen Faser aus einem Rohling aus Rohlingsmaterial, bei dem das Rohlingmaterial durch eine Düse hindurch extrudiert wird. Bei dem erfindungsgemäßen Verfahren wird die Düse in Vibration versetzt.

Bei der Extrusion von Rohlingsmaterial werden Rohmaterial Partikel in der Größe von einigen Mikrometern durch eine Düse hindurch gepresst und dabei verbunden. Es entsteht eine Mikrokristallitstruktur. Das erfindungsgemäße Verfahren löst das Problem, dass beim Pressen der Kristallite des Rohlings durch die Düse in der entstehenden Faser größere gasgefüllte Zwischenräume zwischen benachbarten Mikrokristalliten entstehen können. Bei dem erfindungsgemäßen Verfahren wird dieses Problem dadurch umgangen, dass die Düse in Vibration versetzt wird. Dem von der Düse auf das Material ausgeübten Extrusionsdruck wird dadurch eine periodische Druckzu- und abnahme überlagert. Dadurch werden die mit der Düse in Berührung stehenden Kristallite in Vibration versetzt. Diese wechselwirken aufgrund der Vibration mit anderen Kristalliten. Diese Vibration rüttelt die Kristallite derart zurecht, dass die Gaszwischenräume zwischen ihnen minimiert werden. Die Kristallite werden kompakter gepresst als mit bekannten Verfahren. Dadurch werden die Streuverluste an den Grenzflächen gasgefüllter Zwischenräume und der Mikrokristallite stark reduziert.

Bei einer bevorzugten Ausführungsform der Erfindung wird die Düse in Ultraschallvibration versetzt.

Bei einer weiteren Ausführungsform wird die Vibration über einen Stempel auf die Düse übertragen.

Eine Extrusionsvorrichtung mit eigenständiger Schutzwürdigkeit, die zur Ausführung des erfindungsgemäßen Verfahrens ausgebildet ist, umfasst einen längsverschieblichen Stempel und eine Düse. Erfindungsgemäß ist die Düse mit Mitteln zur Erzeugung von Vibrationen gekoppelt. Die Mittel zur Erzeugung von Vibrationen enthalten vorzugsweise einen Piezokristall.

Bei dieser Ausführungsform befindet sich der Rohling in einer Kammer, in die der Stempel hineingedrückt wird. Alternativ ist es auch möglich, den Stempel zusammen mit der Düse ortsfest zu halten und in die Kammer mit dem Rohling auf die Düse und den Stempel zu zu bewegen. Insbesondere in diesem Falle kann auch die Kammer in Vibration versetzt werden. Dem dient beispielsweise ein piezo elektrischer Schwingungsantrieb, der entweder an der Kammer oder - wie bereits beschrieben - an den Stempel angreift.

Ein weiterer Aspekt der Erfindung mit eigenständiger Schutzwürdigkeit betrifft eine optische Faser mit einem Faserende, bei der eine reflexionsmindernde Mikrostruktur am Faserende vorgesehen ist.

Die erfindungsgemäße optische Faser hat den Vorteil, dass eine reflexmindernde Mikrostruktur unmittelbar am Faserende zugleich einen Schutz für das Faserinnere bildet. Dadurch wird die Faser unemfpindlicher gegen Umwelteinflüsse.

Bei einer Ausführungsform der Erfindung ist die Mikrostruktur dem Fasermaterial aufgeprägt.

Alternativ kann ein am Faserende befestigtes Element vorgesehen sein, das die Mikrostruktur aufweist. Das Element ist vorzugsweise gegen in seiner Umgebung vorhandene chemische Stoffe resistent. In einer Ausführungsform ist das Element aus künstlichem Diamant gefertigt.

Das Element kann, beispielsweise in Ergänzung zur Mikrostruktur, einen für bestimmte Wellenlängen durchlässigen Strahlungsfilter enthalten oder allein als Strahlungsfilter dienen.

In einer anderen Ausführungsform ist eine optische Faser mit einer Mikrostruktur versehen, die derart ausgebildet ist, dass zumindest ein Teil der am Faserende austretenden Strahlung gestreut wird.

Ein weiterer selbständiger Erfindungsgedanke betrifft eine optische Faser, die mehrere Lichtkanäle umfaßt. Diese Lichtkanäle werden vorzugsweise durch zylinderförmige Kerne mit einem ersten Brechungsindex im Inneren der Faser gebildet, die von einem Cladding mit einem zweiten Brechungsindex eingeschlossen werden und durch das Cladding voneinander getrennt sind. Elektromagnetische Strahlung geeigneter Wellenlänge wird im Grenzbereich zwischen dem Cladding und dem jeweiligen Kern totalreflektiert. Der Vorteil einer solchen Faser besteht zum einen darin, daß aufgrund der Vielzahl von Lichtkanälen eine größere Informationsmenge durch die Faser übertragen werden kann als bei einer herkömmliche optischen Faser mit einem einzigen Lichtkanal. Zudem ist es möglich diese Faser dazu einzusetzen, Spektralanalysen an Untersuchungsobjekten durchzuführen. Dazu wird breitbandige elektromagnetische Strahlung durch einen ersten Lichtleiterkanal zu dem Untersuchungsobjekt geleitet. Als Strahlungsquelle kann eine einfache lichtemittierende Diode eingesetzt werden. Das an dem Untersuchungsobjekt reflektierte Licht wird dann durch einen zweiten Lichtleiterkanal der Faser zurückgeleitet. Aus dem Spektrum des reflektierten Lichts können dann Rückschlüsse auf die Beschaffenheit des Untersuchungsobjekts gezogen werden. Somit können spektralanalysen an schwer zugänglichen Untersuchungsobjekten durchgeführt werden.

Eine vorteilhafte Weiterbildung der Faser mit mehreren Lichtleiterkanälen besteht darin, an zumindest einem der Faserenden Spektralfilter anzubringen. Diese Spektralfilter werden vorzugsweise an zumindest einem Ende der Lichtleiterkanäle angebracht. Der Spektralfilter besitzt die Eigenschaft, daß er lediglich für Strahlung mit bestimmten Wellenlängen durchlässig ist. Die aus dem Lichtkanalende mit dem Spektralfilter austretende Strahlung besitzt demnach lediglich Wellenlängen, die den Spektralfilter passieren.

Zum Auskoppeln und Übertragen der elektromagnetischen Strahlung aus den Lichtleiterkanälen zu Detektoren können unterschiedliche Vorrichtungen eingesetzt werden. Zum einen ist es möglich, das Faserende mittels Linsen auf eine Ebene zu projizieren. Das Bild des Faserende auf der Ebene soll eine Vergrößerung darstellen. Ein Detektor kann aus den Lichtleiterkanälen austretende Strahlung empfangen, indem der Detektor in dem Bereich der Projektionsebene platziert wird, in der das Ende des Lichtkanals abgebildet ist. So kann einem Detektor jeweils die aus einem der Lichtleiterkanäle austretende Strahlung separat zugeführt werden. Da das Bild des Faserendes in der Projektionseben vergrößert ist, sind die Abstände zwischen den Lichtkanälen in der Projektionsebene ebenfalls größer, so daß es einfacher ist, die aus den Lichtkanälen austretende Strahlung getrennt voneinander zu erfassen.

Ferner ist es möglich eine gegabelte Faser einzusetzen, um die aus den Lichtkanälen austretende Strahlung getrennt voneinander auszukoppeln. Die gegabelte Faser besitzt drei Enden. Ein erstes Ende, an dem ein erster und ein zweiter Lichtkanal enden, ein zweites Ende, an dem der erste Lichtkanal endet und ein drittes Ende, an dem der zweite Lichtkanal endet. An der Gabelung verzweigen sich die zwei Lichtkanäle, um getrennt voneinander durch die Äste der Gabelung zu verlaufen.

Die Herstellung einer gegabelten Faser kann beispielsweise dadurch erfolgen, daß zwei Fasern bis in den Bereich eines Lichtleiterkanals seitlich angeschliffen werden, so dass Licht aus dem Kanal seitlich austreten kann. Die angeschliffenen Bereiche werden anschließen derart aneinander befestigt, daß das Licht über die angeschliffenen Flächen von einem Lichtleiterkanal einer Faser in den angrenzenden Lichtleiterkanal der anderen Faser eindringen kann.

Ein weiterer eigenständiger Erfindungsgedanke betrifft eine optische Faser mit einem Lichtleiterkanal, in dem sich ein optisch aktives Material befindet. Das optisch aktive Material ist dadurch gekennzeichnet, daß es von den Lichtleiterkanal passierendem Licht angeregt werden kann, d.h. das optisch aktive Material absorbiert das Licht, wonach es einen höheren Energiezustand einnimmt. Eine solche Faser eignet sich zur Herstellung eines Lasers. Das optisch aktive Material in der Faser wird durch optisches Pumpen, d.h. durch Einkopplung von geeignetem Licht bzw. elektromagnetischer Strahlung derart angeregt, daß eine Besetzungsinversion auftritt. Die Anzahl der angeregten Zustände übersteigt im zeitlichen Mittel die Anzahl der nicht angeregten Zustände. Das Laserlicht entsteht durch stimulierte Emission von Strahlung und tritt an dem Ende des Lichtkanals aus. Um einen Resonator für das Laserlicht bereitzustellen, sind vorzugsweise die Enden der optischen Faser verspiegelt, wobei einer der Spiegel für das Laserlicht teilweise durchlässig ist, so daß dieses aus der Faser austreten kann.

Weitere Ausführungsbeispiele der Erfindungen werden im folgenden anhand der Zeichnung beschrieben. Darin zeigen
- Figur 1: eine stark vereinfachte Schnittdarstellung eines Reaktors zur Herstellung und Reinigung flüssigen Ausgangsmaterials sowie zur Herstellung eines Faserrohlings,
- Figur 2a: eine perspektivische Prinzipskizze einer Vorrichtung zur Herstellung eines Faserrohlings,
- Figur 2b: eine Schnittansicht der Vorrichtung aus Figur 2a,
- Figur 2c: eine Schnittansich einer weiteren Vorrichtung zur Herstellung eines Faserrohlings,
- Figur 2d: eine Schnittansicht einer weiteren Vorrichtung zur Herstellung eines Faserrohlings,
- Figur 3: eine schematische, stark vereinfachte Schnittansicht einer weiteren Vorrichtung zur Herstellung eines Faserrohlings,
- Figur 4a: die Schnittansicht der Vorrichtung gemäß Figur 3,
- Figur 4b: ein Diagramm, das verschiedene Abhängigkeiten des Brechungsindexes von der radialen Position bei drei verschiedenen zylindrischen Faserrohlingen darstellt, die von der Vorrichtung gemäß Fig. 4a hergestellt wurden,
- Figur 5a: eine schematische, stark vereinfachte Schnittansicht einer weiteren Vorrichtung zur Herstellung eines Faserrohlings,
- Figur 5b: ein Diagramm, das die Abhängigkeit des Brechungsindexes von der radialen Position bei einem weiteren zylindrischen Faserrohling darstellt, der von der Vorrichtung gemäß Fig. 5a hergestellt wurde,
- Figur 6a: eine vereinfachte Darstellung einer Extrusionsvorrichtung zur Herstellung einer optischen Faser,
- Figur 6b: eine vereinfachte Darstellung einer weiteren Extrusionsvorrichtung zur Herstellung einer optischen Faser,
- Figur 7a: ein Profil eines Faserendes eines Ausführungsbeispiels einer erfindungsgemäßen optischen Faser,
- Figur 7b: eine perspektivisch Ansicht des Faserendes gemäß Fig. 7a
- Figur 8a: einen Querschnitt einer Faser mit mehrere Lichtleiterkanälen,
- Figur 8b: einen Querschnitt einer weiteren Faser mit mehreren Lichtleiterkanälen,
- Figur 9: eine schematische Ansicht einer Vorrichtung zum Projezieren eines Faserendes auf eine Projektionsebene, und
- Figur 10: eine seitliche Ansicht einer gegabelten Faser.

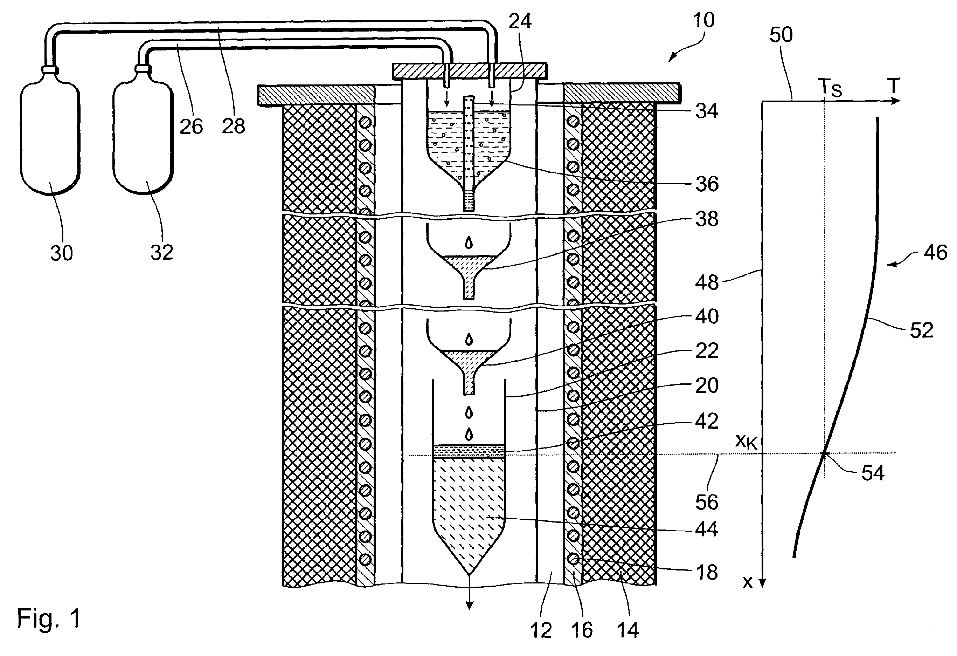

Figur 1 zeigt in einer stark vereinfachten Schnittdarstellung einen Reaktor 10 zur Herstellung und Reinigung flüssigen Ausgangsmaterials sowie zur Herstellung eines Faserrohlings. Der Reaktor 10 bildet eine zylindrische Reaktorkammer 12, deren Wandungen 14 mit einer Heizvorrichtung 16 versehen ist. Von der Heizvorrichtung sind in Figur 1 lediglich Heizwendel 18 dargestellt.

In der Reaktorkammer 12 ist ein zylindrischer Behälter 20 angeordnet, der eine Röhre 22 umschließt. Die Röhre 22 ist über nicht dargestellte Anschlüsse mit externen Vakuumpumpen und mit Gasbehältern für die Herstellung eines Vakuums oder einer inerten Gasatmosphäre verbindbar. Innerhalb der Röhre 22 ist ein Behälter 24 angeordnet. Der Behälter 24 ist zur Aufnahme flüssigen Metalls ausgebildet. Zusätzlich ist der Behälter 24 über Gasrohre 26 und 28 ist mit zwei extern angeordneten Halogengasquellen 30 und 32 verbunden. Aus dem flüssigen Metall und den aus den Halogengasquellen 30 und 32 stammenden Gasen wird das flüssige Ausgangsmaterial für die Herstellung des Faserrohlings gewonnen. Die Zusammensetzung des flüssigen Ausgangsmaterials wird durch den jeweiligen Partialdruck der Halogengase oberhalb der Flüssigkeit sowie durch die Temperatur in dem Behälter 24 bestimmt. Damit das Ausgangsmaterial frei von Verunreinigungen ist, wird der Behälter evakuiert, bevor die Halogengase eingeführt werden. Dadurch wird die Anzahl von Fremdatomen oder Molekülen in dem Behälter stark reduziert. Ferner wird ein inertes Gas, also ein reaktionsunfreudiges Gas wie Stickstoffgas oder ein Edelgas, in den Behälter 24 eingeführt. Dieses Gas verhindert, daß eventuell in dem Behälter verbliebene Fremdgase mit der Flüssigkeit reagieren. Vorzugsweise wird ein inertes Gas gewählt, das schwerer ist als die denkbaren Fremdgase wie Sausterstoffgas oder Wasserdampf oder deren gasförmigen Reaktionsprodukte, so daß die Fremdgase nicht mit der Flüssigkeit in Berührung kommen. Nicht dargestellt sind Mittel zur Einstellung des Partialdruckes der beiden Halogengase im Behälter 24. Im Behälter 24 werden die aus den Quellen 30 und 32 einströmenden Halogengase mit dem flüssigen Metall zur Reaktion gebracht. Beispielsweise werden hier flüssiges Silber und die Halogengase Brom und Chlor zur Reaktion gebracht, so dass eine flüssige Mischung von AgBr und AgCI entsteht. Hierzu ist der Behälter auf eine geeignete Reaktionstemperatur erhitzbar.

Der Behälter 24 ist weitgehend zylindrisch, verjüngt sich jedoch sich nach unten hin trichterartig und mündet an der Außenwandung eines hohlzylindrischen Rohrs 34. Das Rohr 34 verläuft zentrisch innerhalb des Behälters 32 und erstreckt sich über den größten Teil seiner Längserstreckung. Die Wandung des Rohrs 34 ist, soweit sich das Rohr innerhalb des Behälters erstreckt, porös, so dass flüssiges AgBr und AgCI aus dem Behälter in das Rohr dringen kann und durch das Rohr nach unten abfließt. Vor dem Austritt aus dem Rohr 34 durchläuft das flüssige Ausgangsmaterial einen Filter 36.

Nach unten hin folgt auf den Behälter 32 eine Anzahl von kapillaren Reinigungsstufen, von denen hier zwei Reinigungsstufen 38 und 40 dargestellt sind. Die Reinigungsstufen 38 und 40 sind trichterförmig und enthalten ein kapillares Filtermaterial. Das flüssige Ausgangsmaterial durchläuft diese Reinigungsstufen und sammelt sich nach dem Austritt aus der letzten Reinigungsstufe 40 in einem Ausgangsmaterialbad 42 im unteren Bereich der Röhre 22. Das Ausgangsmaterialbad 42 lagert auf einem festen Rohlingsabschnitt 44, der aus dem flüssigen Ausgangsmaterialbad nach und nach durch Abkühlen unter die Schmelztemperatur unter stetigem Vorschub der Röhre 22 nach unten entsteht.

Hierfür ist die Röhre 22 ist zusammen mit dem Behälter 20 längs der Reaktorkammer verschiebbar angeordnet. Die zu diesem Zweck vorgesehenen Lager-, Antriebs- und Steuervorrichtungen sind in Figur 1 der Einfachheit halber nicht dargestellt.

Die Heizvorrichtung 16 ist so ausgebildet, dass ein in der Längsrichtung der Reaktorkammer 12 veränderliches Temperaturprofil eingestellt werden kann. Ein Beispiel eines solchen Temperaturprofils ist in Figur 1 links neben dem Reaktor 10 in Form eines Temperaturdiagramms 46 dargestellt. Im Temperaturdiagramm 46 verläuft abweichend von der üblichen Darstellung eine Abszisse 48 von oben nach unten. Auf der Abszisse 48 ist sind Positionen x entlang der Längserstreckung der rechts vom Diagramm abgebildeten Reaktorkammer 12 relativ zur Oberkante der Reaktorkammer aufgetragen. Auf einer Ordinate 50 ist die Temperatur T in der Reaktorkammer 12 aufgetragen, wobei die Temperaturwerte auf der Ordinate 24 im Temperaturdiagramm 20 von links nach rechts steigen. Das hier dargestellte Temperaturprofil ist also die Abhängigkeit der Temperatur T in der Reaktorkammer 12 von der Position x entlang der Längserstreckung der Reaktorkammer.

Auf der Ordinate 24 ist ein Temperaturwert T_{S} gekennzeichnet, der die Schmeltztemperatur des flüssigen Ausgangsmaterials angibt. Dieser Wert ist im Diagramm 46 auch durch eine gestrichelte, parallel zur Abszisse 48 verlaufende Linie markiert.

Eine Temperaturkurve 52 gibt den Verlauf der Temperatur in der Reaktorkammer 12 wieder. Die Temperatur liegt im oberen Bereich der Reaktorkammer oberhalb der Schmelztemperatur und sinkt nach unten hin kontinuierlich, bis sie bei einer mit xₖ markierten Position die Schmelztemperatur erreicht. Dieser Punkt ist im Diagramm 46 mit einem Kreuz 54 gekennzeichnet.

Eine gestrichelte Linie 56 zeigt an, dass auf dieser Höhe in der Röhre 22 die Grenze zwischen dem Ausgangsmaterialbad 42 und der festen Abschnitt 44 des Faserrohlings liegt. Durch allmähliches Führen der Röhre 22 nach unten wird kontnuierlich mehr Ausgangsmaterial unter die Schmelztemperatur abgekühlt und kristallisiert.

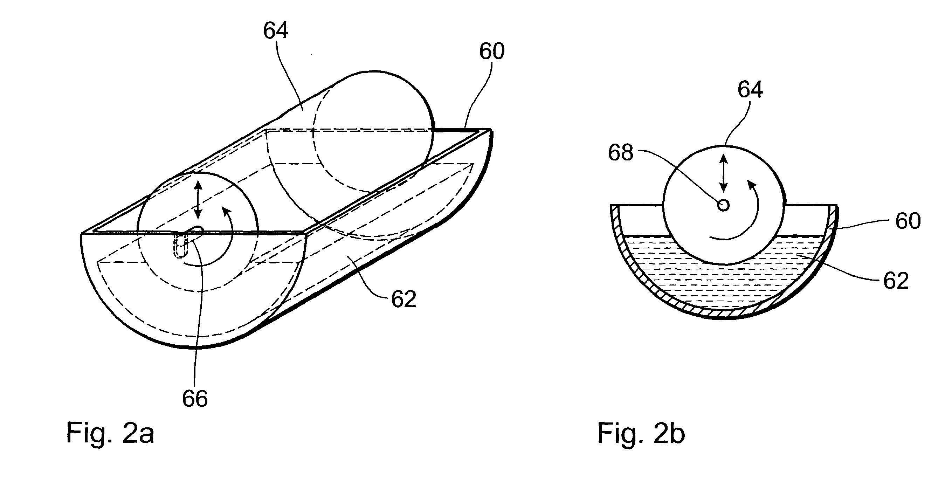

Figur 2a zeigt eine perspektivische Prinzipskizze einer Vorrichtung zur Herstellung eines Faserrohlings. Figur 2b zeigt dieselbe Vorrichtung in einer Querschnittsansicht. Die Vorrichtung enthält ein Gefäß 60, das etwa die Form eines in einer Mittelebene durchschnittenen Hohlzylinders hat. Das Gefäß 60 nimmt ein Ausgangsmaterialbad 62 auf, das beispielsweise aus einer flüssigen AgCl/AgBr-Mischung besteht. In das Ausgangsmaterialbad 62 ist ein fester, zylindrischer Kern 64 teilweise eingetaucht. Der Kern 64 ist in einer hier nur prinzipartig angedeutete Lagervorrichtung 66 um seine Längsachse 68 drehbar gelagert. Die Lagervorrichtung ist so ausgebildet, dass der Kern relativ zum Bad nach oben oder unten verschoben werden kann.

Beim Rotieren des in das Ausgangsmaterialbad 62 eingetauchten Abschnitts des Kerns 64 haftet flüssiges Ausgangsmaterial an seiner Oberfläche an. Nach dem Auftauchen dieses Abschnittes aus dem Bad 62 kühlt das anhaftende flüssige Material ab und kristallisiert. Beim Wiedereintauchen in das Bad bildet dieses Material die Oberfläche für das Anhaften weiteren flüssigen Ausgangsmaterials. Auf diese Weise wächst der zylindrische Kern 64 nach und nach in radialer Richtung.

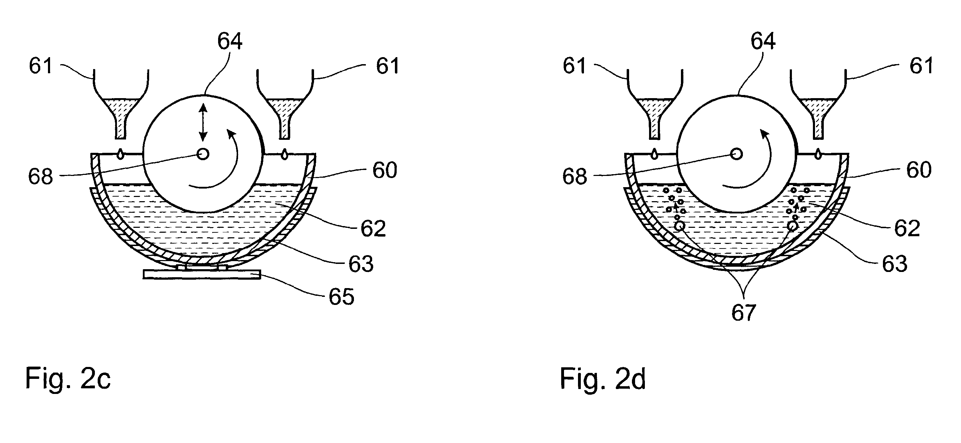

Fig. 2c zeigt eine weitere Vorrichtung zur Herstellung eines Faserrohlings. Diese Vorrichtung ist weitgehend mit der in Fig. 2a und 2c gezeigten Vorrichtung identisch. Zusätzlich umfasst die Vorrichtung in Fig. 2c eine Heizvorrichtung 63 zur Einstellung der Temperatur des Bades 62. Die Heizvorrichtung ummantelt das Gefäß 60 weitgehend, damit die Temperatur der Flüssigkeit genau eingestellt werden kann. Die Vorrichtung in Fig. 2c ist ferner dazu vorgesehen, einen Faserrohling zu erzeugen, dessen Brechungsindex sich radial kontinuierlich verändert. Dazu wird die Zusammensetzung des flüssigen Ausgangsmaterials im Verlauf des Wachstums des Kerns 64 verändert. Hierfür sind Trichter 61 vorgesehen, die ein Ausgangsmaterial mit einem anderen Mischungsverhältnis von AgBr und AgCI als in dem Bad enthalten. Die Flüssigkeit aus den Trichtern wird dem Bad 62 im Verlauf des Wachstums des Faserrohlings beigemengt. Der Brechungsindex des Faserrohlings soll in Richtung von dessen Längsachse unveränderlich sein. Deshalb muß stets dafür gesorgt werden, dass das flüssige Ausgangsmaterial in dem Bad eine homogene Mischung darstellt. An der Unterseite des Gefäßes ist eine Vibrationsvorrichtung angebracht, die den Behälter 60 derart rüttelt, daß sich die von den Trichtern 61 stammende Flüssigkeit in dem Bad 62 homogen verteilt. Zur optimalen Durchmischung der Flüssigkeit müssen die Frequenz und Amplitude der Vibration geeignet eingestellt sein. Die Vibrationsvorrichtung umfaßt mehrere Piezokristalle, die entlang dem Behälter angeordnet sind und gleichzeitig über eine Wechselspannungsquelle angesteuert werden.

Fig. 2d zeigt eine Schnittansicht einer weiteren Vorrichtung zur Herstellung eines Faserrohlings. Diese Vorrichtung entspricht weitgehend der in Fig. 2d gezeigten. Anstelle einer Vibrationsvorrichtung umfaßt die Vorrichtung rohrförmige Gasleitungen 67 zum Durchleiten von Inertgasen durch die Flüssigkeit. Die Gasleitungen 67 befinden sich am Boden des Bades 62 und erstrecken sich über die gesamte Länge des Bades 62. An der Oberseite der Gasleitungen 67 befinden sich (nicht gezeigte) Öffnungen, aus denen das Gas austritt und blasenförmig zu Oberfläche der Flüssigkeit steigt. Als Inertgase werden vorzugsweise Stickstoff oder ein Edelgas eingesetzt. Die durch die Flüssigkeit strömenden Gasblasen sorgen für eine Durchmischung der Flüssigkeit. Vorzugsweise sind die Gasleitungen 67 derart angeordnet, daß die Gasblasen zwischen dem Kern 64 und der über die Trichter beigemengten Flüssigkeit aufsteigen, um eine optimale Durchmischung zu gewährleisten.

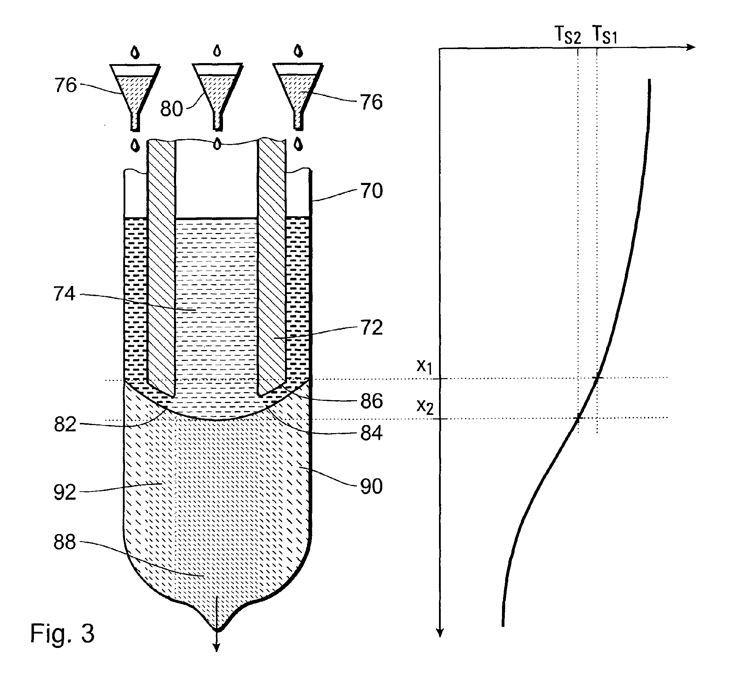

Figur 3 zeigt einen Ausschnitt einer weiteren Vorrichtung zur Herstellung eines Faserrohlings. Die Vorrichtung ähnelt grundsätzlich der anhand von Figur 1 beschrieben Vorrichtung 10. Die Reaktorkammer ist hier jedoch nicht näher dargestellt. Die hiesige Vorrichtung weist innerhalb der Reaktorkammer eine erste Röhre 70 auf. In die erste Röhre 70 ragt eine zweite Röhre 72 mit geringerem Durchmesser hinein. Die erste Röhre 70 ist in Richtung ihrer Längsachse gegen die zweite Röhre 72 verschiebbar.

Die Herstellung eines Faserrohlings geschieht bei der vorliegenden Vorrichtung grundsätzlich so wie anhand von Figur 1 beschrieben, nämlich durch Abkühlen eines Ausgangsmaterialbades 74. Hierfür wird die Röhre 72 entlang eines Temperaturprofils 75 kontinuierlich nach unten verschoben.

Im Unterschied zur Vorrichtung nach Figur 1 ist das Ausgangsmaterialbad 74 hier jedoch aus unterschiedlichen Komponenten zusammengesetzt. Während durch die äußere, erste Röhre 70 ein erstes flüssiges Ausgangsmaterial zugeführt wird, wird durch die innnere, zweite Röhre 72 wird ein zweites Ausgangsmaterial zugeführt. Bei dem ersten Ausgangsmaterial handelt es sich um das Ausgangsmaterial des Claddings einer optischen Faser, bei dem zweiten Ausgangsmaterial um das Ausgangsmaterial des Kerns der optischen Faser. Das Material des Kerns beispielsweise AgCl/AgBr mit einem Verhältnis von 3:1

Dementsprechend sind die erste und die zweite Röhre mit unterschiedlichen Zuführungssystemen für flüssiges Ausgangsmaterial verbunden, was in Figur 3 durch drei verschiedene Reinigungsstufen 76 und 80 angedeutet ist. Die Reinigungsstufen 76 münden in die erste Röhre 70 und die Reinigungsstufe 80 mündet in die zweite Röhre 72.

Im Bereich der Mündung der zweiten Röhre 72 in die erste Röhre 70 kommen die unterschiedlichen Ausgangsmaterialien miteinander in Kontakt. Zwischen der Mündung der zweiten Röhre 72 und einer Kristallisationsfläche 82 bildet sich unterhalb der Wandung der zweiten Röhre 72 eine zylinderförmige Diffusionszone 84 aus. Eine Durchmischung der unterschiedlichen Ausgangsmaterialien aufgrund von Strömungen kann durch entsprechend langsame Prozessführung verhindert werden. Bei Silberhalogeniden spielen deartige Strömungsprobleme jedoch grundsätzlich keine wesentliche Rolle.

Die Stirnfläche 86 der zweiten Röhre 72 ist parallel zur Phasengrenzfläche geformt. Auf diese Weise wird sichergestellt, dass die Dauer der Diffusion unabhängig von der radialen Position ist.

Die Form der Kristallisationsfläche 82 hängt von den Schmelztemperaturen der verwendeten Ausgangsmaterialien und vom Temperaturprofil 75 ab. Im vorliegenden Fall hat das durch die erste Röhre 70 zugeführte erste Ausgangsmaterial eine höhere Schmelztemperatur T_{S1} als das durch die zweite Röhre 72 zugeführte zweite Ausgangsmaterial, das eine Schmelztemperatur T_{S2} hat.

Die Temperaturen T_{S1} und T_{S2} werden in der Reaktorkammer an unterschiedlichen Positionen x₁ und x₂ erreicht. Die Kristallisationfläche erstreckt sich daher in Längsrichtung der ersten Röhre 70 zwischen diesen Positionen x₁ und x₂. In radialer Richtung der Röhre 70 ist die Lage der Grenzfläche zwischen der flüssigen und der festen Phase vom Mischungsverhältnis zwischen den beiden Ausgangsmaterialien abhängig. Je größer der Anteil des ersten Ausgangsmaterials, desto näher liegt die Phasengrenzfläche an der Position x₁. Je größer der Anteil des zweiten Ausgangsmaterals, desto näher liegt die Phasengrenzfläche an der Position x₂. Im vorliegenden Fall bildet sich daher aufgrund der Diffusion zwischen den beiden Ausgangsmaterialien eine konvex gekrümmte Phasengrenzfläche 82 aus.

Die genaue Form der Phasengrenzfläche 82 ist bei gegebenen Ausgangsmaterialien und gegebenem Temperaturprofil in der Reaktorkammer anhand der Schmelztemperatur der reinen Ausgangsmaterialien und ihrer Mischungen berechenbar.

Unterhalb der Phasengrenzfläche bildet sich der feste Faserrohling mit einem Kern 88, der aus dem kristallisierten zweiten Ausgangsmaterial besteht. Außen weist der Rohling ein Cladding aus erstem Ausgangsmaterial auf. Zwischen Kern 88 und Cladding 90 befindet sich ein Übergangsbereich 92.

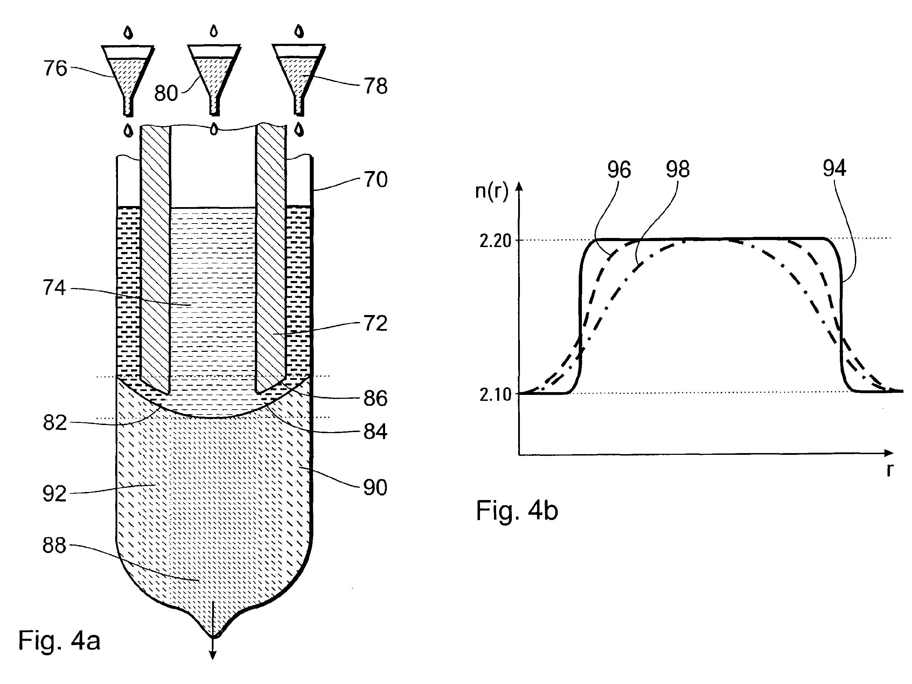

Figur 4a zeigt die Vorrichtung zur Herstellung eines Faserrohlings gemäß Fig. 3. Daneben zeigt Fig. 4b ein Diagramm, das die Abhängigkeit des entsprechenden Brechungsindexes von der radialen Position bei drei verschiedenen zylindrischen Faserrohlingen darstellt. Dem Brechungsindex jedes Faserrohlings ist eine andere Linienart zugeordnet. Als Beispiel ist jeweils eine feste Lösung von AgBr/AgCl mit unterschiedlichen Mischungsverhältnissen in Kern und Cladding dargestellt. Das reine Claddingmaterial hat den Brechungsindex 2.1, das reine Kernmaterial hat den Brechungsindex 2.2. Variiert wurde allein die Diffusionsdauer vor der Überführung des Ausgangsmaterialbades in die feste Phase.

Die durchgezogene Linie 94 ist ein Brechungsindexprofil mit relativ scharfem, fast stufenförmigem Übergang nahezu ohne Übergangsbereich. Es entspricht einer kurzen Diffusionsdauer. Die gestrichelte Linie 96 zeigt dagegen ein leicht gerundetes Brechungsindexprofil, entsprechend einer mittleren Diffusionsdauer. Zwischen Kern und Cladding befindet sich ein Übergangsbereich mit Brechungsindices die allmählich von 2.2 auf 2.1 sinken. Die strichpunktierte Linie 98 schließlich zeigt ein stark gerundetes Brechungsindexprofil mit einem Übergangsbereich großer Ausdehnung. Dies ist die Folge einer besonders langen Diffusionsdauer vor der Kristallisation.

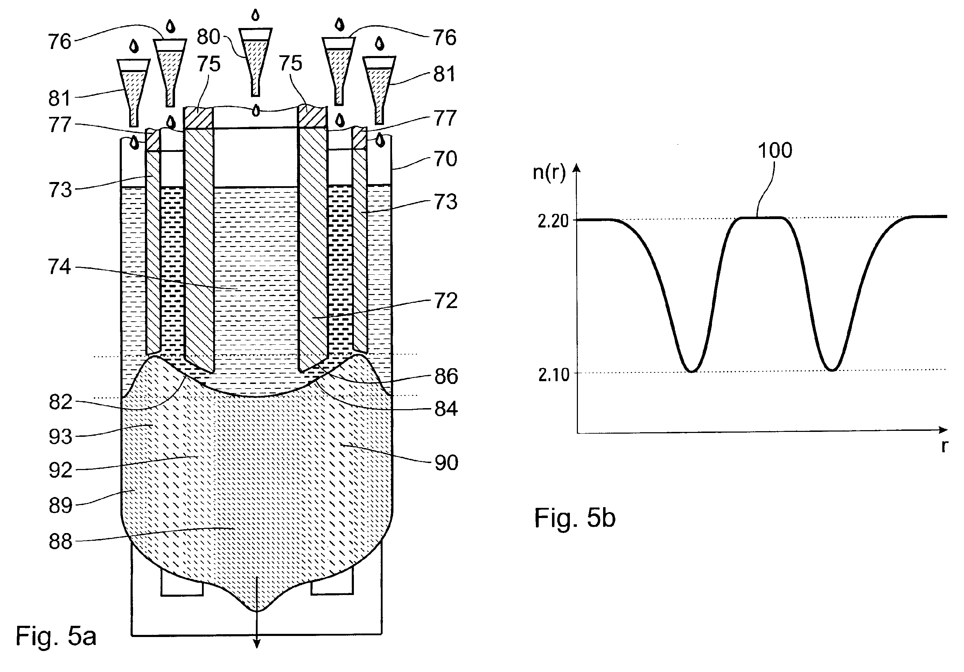

Figur 5b zeigt ein Diagramm mit der Abhängigkeit des Brechungsindexes von der radialen Position bei einem weiteren zylindrischen Faserrohling. Daneben zeigt Fig. 5a eine weitere Vorrichtung zur Herstellung dieses Faserrohlings. Diese Vorrichtung stellt eine modifizierte Ausführungsform der Vorrichtung nach Figur 3 dar. Bei dieser Vorrichtung verläuft die zweite Röhre 72 innerhalb einer dritten Röhre 73. Die erste Röhre 70 schließt wiederum die dritte Röhre 73 ein. Das durch die zweite Röhre 72 zugeführte Ausgangsmaterial entspricht dem durch die erste Röhre zugeführten Ausgangsmaterial und besitzt beispielsweise in fester Phase einen Brechungsindex 2.2. Durch die dritte Röhre 73 wird nunmehr ein Ausgangsmaterial zugeführt, das zum Beispiel in fester Phase den Brechungsindex 2.1 aufweist. Infolge der Diffusion entsteht so ein Faserrohling mit einem W-förmigen Brechungsindexprofil 100, das in dem Diagramm von Fig. 5b dargestellt ist. Ferner sind auf den Röhren 72 und 73 jeweils eine ringförmige Piezoelementanordnung 75 und 77 angebracht, die mittels eines (nicht gezeigten) Wechelspannungsgenerator angesteuert werden. Die Röhren 72 und 73 werden somit entlang ihrer Längsachse in eine von dem Wechselspannungsgenerator vorbestimmte Schwingung verstetzt. Diese bewirkt eine stärkere Durchmischung der Ausgangsmaterialien in den Diffusionszonen unterhalb der Röhren 72 und 73. Somit kann der Verlauf des Brechungsindexes eingestellt werden. Eine stärkere Durchmischung bewirkt einen weniger steilen Verlauf des Brechungsindex im Bereich der Diffusionszonen. Eine weniger starke Durchmischung hat den gegenteiligen Effekt.

Derartige w-förmige Gradienten-Brechungsindexprofile haben den Vorteil, dass die Kern-Mantelstruktur einer Faser gleich beim Kristallziehprozess und nicht erst beim anschließenden Extrusionsprozess erzeugt wird. Damit werden besonders geringe Konzentrationen von Verunreinigungen erzielt, die sich bei herkömmlichen Herstellungsverfahren gerade an der Grenzfläche von Kern und Cladding konzentrieren.

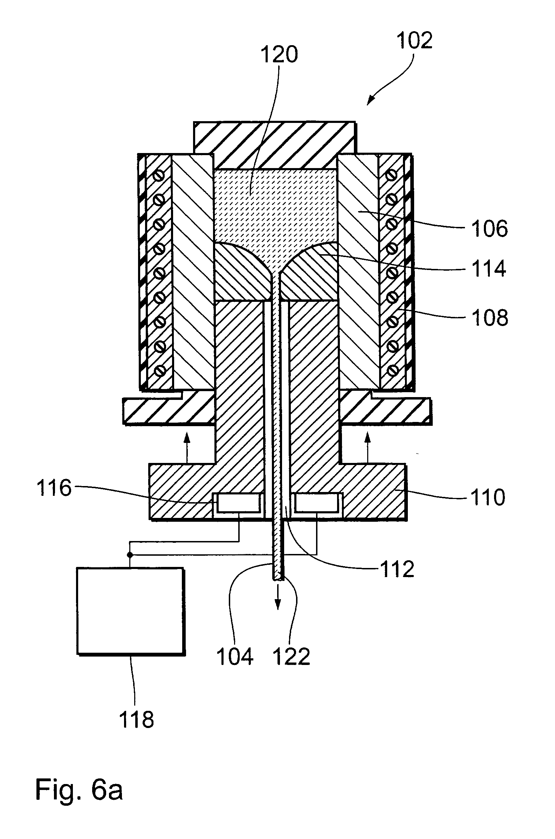

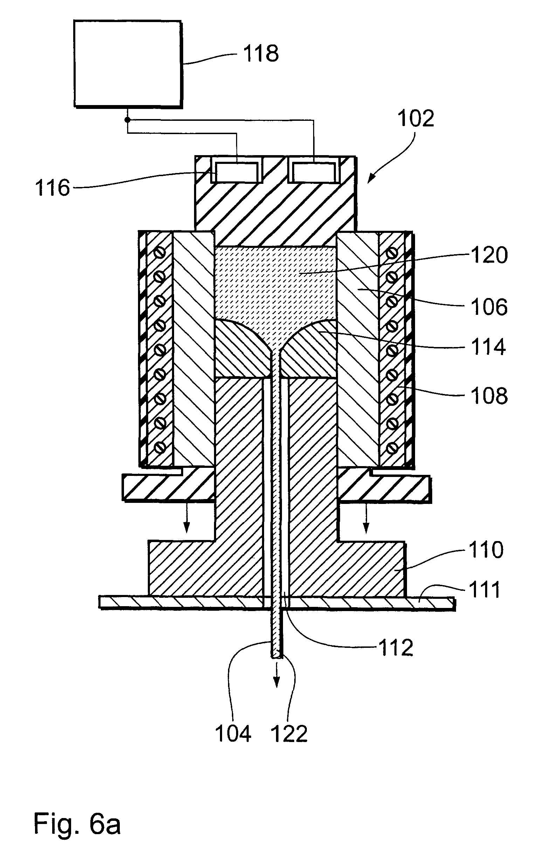

Figur 6a zeigt eine vereinfachte Darstellung einer Extrusionsvorrichtung 102 zur Herstellung einer optischen Faser 104. Die Extrusionsvorrichtung 102 weist eine etwa zylindrische Hochdruckkammer auf, die von wärmeleitenden Wandungen 106 umgrenzt ist. Eine Heizvorrichtung 108 umgibt die Wandungen.

In die Hochdruckkammer greift ein längsverschieblicher Stempel 110 ein. Der Stempel 110 weist eine zentrische Bohrung 112 auf, die sich über seine gesamte Länge erstreckt. Der Stempel 110 steht an einem Längsende in der Hochdruckkammer mit eine Düse 114 in Berührung. Am entgegengesetzten Längsende ist der Stempel 110 mit einer Piezoeelemente aufweisenden Vibrationsvorrichtung 116 versehen, die mit einer Energieversorgungs- und Frequenzgeneratoreinheit 118 verbunden ist.

Die Düse 114 hat eine mit der Bohrung 112 konzentrische Düsenöffnung. Ihre der Reaktionskammer zugewandte Seite weist eine zur Düsenöffnung hin gekrümmte Oberfläche auf. Diese Oberfläche steht mit einem Faserrohling 120 in Kontakt.

Zur Herstellung einer optischen Faser übt der Stempel über die Düse eine Druckkraft auf den Faserrohling 120 aus. Gleichzeitig erzeugt die Vibrationsvorrichtung eine der Druckkraft des Stempels 110 überlagerte Vibrationskraft, die über den Stempel und die Düse 114 auf den Faserrohling 120 übertragen wird. Dem von der Düse 114 auf den Faserrohling 120 ausgeübten Extrusionsdruck wird dadurch eine periodische Druckzu- und abnahme überlagert. Dadurch werden die mit der Düse 114 in Berührung stehenden Kristallite des Faserrohlings 120 in Vibration versetzt. Diese wechselwirken aufgrund der Vibration mit anderen Kristalliten des Faserrohlings. Diese Vibration rüttelt die Kristallite derart zurecht, dass die Gaszwischenräume zwischen ihnen minimiert werden. Dies sorgt für eine besonders dichte Verteilung der Mikrokristallite in der einer die Bohrung 112 des Stempels 110 der Extrusionsvorrichtung 102 nach unten heraustretende optische Faser 122.

Fig. 6b zeigt eine vereinfachte Darstellung einer Extrusionsvorrichtung 102, die sich in folgenden Details von der in Fig. 6a gezeigten Extrusionsvorrichtung unterscheidet. Der Stempel 110 der Extrusionsvorrichtung ist ausgebildet, auf einer Unterlage 111 aufzuliegen. Die Unterlage 111 bestitzt eine Öffnung, durch die die Optische Faser 104 extrudiert wird. Die Hochdruckkammer 120 wird auf den Stempel 110 gepreßt, um die Faser 104 aus der Öffnung der Unterlage 111 zu extrudieren. In dem dem Stempel 110 gegenüber liegenden Bereich der Wandung 106 sind die Piezoeelemente der Vibrationsvorrichtung 116 vorgesehen, die mit einer Energieversorgungs- und Frequenzgeneratoreinheit 118 verbunden ist. Diese Anordnung der Vibrationsvorrichtung hat den Vorteil, daß die Piezoelemente die Gewichtslast der Kammer 120 und der sie begrenzenden Wandung 106 und Heizvorrichtung 108 nicht tragen muß.

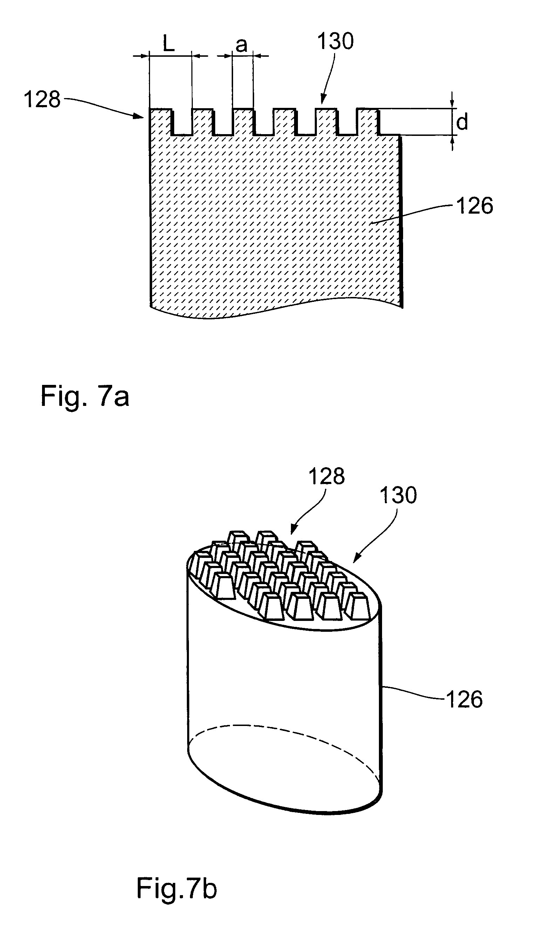

Figur 7a zeigt ein Profil einer aus aus Metallhalogeniden gefertigten optischen Faser 126 im Bereich eines Längsendes. Figur 7b zeigt eine perspektivische Ansicht desselben Bereiches. Die Schnittebene der Darstellung der Figur 7a verläuft in einer die Längsachse der zylindrischen Faser 126 enthaltenden Mittelebene.

An einer Stirnfläche 128 weist die Faser 126 eine reflexmindernde Mikrostruktur 130 auf. Die Mikrostruktur besteht hier aus in zwei zueinander orthogonalen Richtungen, einer x- und einer y- Richtung, periodisch angeordneten etwa quaderförmigen Elementen. Die Periode, das heißt der Abtand zwischen gleichen Abschnitten benachbarter Elemente, ist in Figur 7a mit L bezeichnet und ist hier in x- und in y-Richtung identisch. Die Periode L ist abhängig vom Wellenlängenbereich, in dem die Faser betrieben werden soll. Für Wellenlängen zwischen etwa 8 und 12 Mikrometern beträgt die Periode etwa 2 Mikrometer. Die Darstellung der Figuren 7a und 7b gibt diese Ausmaße nicht maßstäblich wieder.

Die Seitenlänge der Quader ist mit a bezeichnet. Durch Festlegen des Verhältnisses L/a, des sogenanten Füllfaktors, kann der effektive Brechungsindex der Mikrostruktur auf einen Wert zwischen dem der Faser und dem der umgebenden Mediums, beispielsweise Luft eingestellt werden. Für die Herstellung einer Lambda/4-Schicht wird der effektive Brechungsindex als das geometrische Mittel der beiden Brechungsindizes von Faser und Luft gewählt, Unter Ausnutzung von Beugungseffekten entsteht so eine reflexmindernde Oberfläche der Faser.

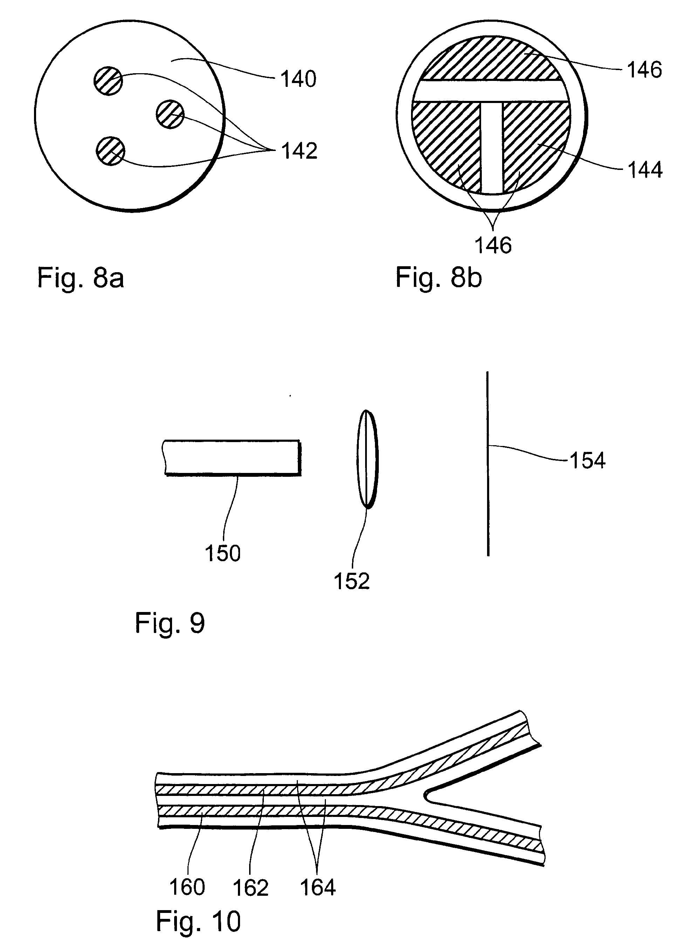

Figur 8a zeigt einen Querschnitt einer Faser mit mehreren Lichtleiterkanälen 142. Die Lichtleiterkanäle 142 sind zylindrisch ausgebildet und durchlaufen die optische Faser entlang deren gesamten Längserstreckung. In Figur 8a sind drei Lichtleiterkanäle 142 dargestellt, die voneinander beabstandet sind. Zwischen den Lichtleiterkanälen 142 befindet sich das Cladding 140. Das Cladding besteht aus einem Material, das einen anderen Brechungsindex aufweist als der Brechungsindex der Lichtleiterkanäle. Aufgrund des Unterschiedes zwischen den Briechungsindizes kommt es an der Grenzfläche zwischen den Lichtleitern und dem Cladding zu einer Totalreflexion des Lichts. Das in dem Lichtleiterkanal befindliche Licht kann diesen nicht verlassen und wird durch die Faser geleitet. Da die Lichtleiterkanäle durch das Cladding 140 voneinander beabstandet sind, kann das durch einen Kanal geleitete Licht nicht in einen der angrenzenden Kanäle gelangen.

Fig. 8b zeigt einen Querschnitt einer weiteren optischen Faser mit mehreren Lichtleiterkanälen 146. Die Lichleiterkanäle besitzen im gegensatz zu der Faser in Fig. 8a kein kreisförmiges Querschnittsprofil, sondern bilden Kreissegmente unterschiedlicher Größe aus. Die Lichtleiterkanäle werden dadurch ausgebildet, daß ein Cladding 144 im Querschnitt eine im wesentlichen kreisförmige Umrandung bildet, die von einem T-förmigen Abschnitt des Cladding 144 durchsetzt wird.

Fig. 9 zeigt eine schematische Seitenansicht einer Vorrichtung zur Projektion eines Faserendes auf eine Projektionsebene 154. Zwischen dem Faserende 150 und der Projektionsebene 154 ist ein optisches System 152 angeordnet, daß dafür sorgt, daß das Faserende auf die Projektionsebene 154 scharf abgebildet wird. Das optische System 152 besteht vorzugsweise aus einer oder mehreren Linsen, deren Brennweite und Beabstandung untereinander und zu dem Faserende 150 und der Projektionsebene 154 derart gewählt ist, daß auf der Projektionsebene 154 ein scharfes und vergrößertes Bild des Faserendes erscheint.

Fig. 10 zeigt eine seitliche Schnittansicht einer gegabelten Faser. Die gegabelte Faser umfaßt zwei Lichtleiterkanäle 162, die von einem Cladding 164 eingefaßt und voneinander getrennt sind. Die Lichtleiterkanäle verlaufen zunächst parallel zueinander durch die Faser bis zur Gabelung. Dort verlaufen sie getrennt voneinander jeweils durch einen der zwei Faserstränge bzw. Äste 166, die von der Gabelung fortlaufen.

Es sind, im Rahmen der jeweiligen Erfindungsgedanken, zahlreiche Varianten der vorgestellten Vorrichtungen und Verfahren möglich. Die hergestellten Fasern sind vorzugsweise als polykristalline Infrarotfasern ausgebildet. Beispielsweise kann die chemische Reaktion zwischen Halogengasen und flüssigem Metall zur Bildung von Metallhalogeniden auch in einer reaktiven Gasatmosphäre herbeigeführt werden. Bei der Extrusionsvorrichtung kann die Vibrationskraft auch unmittelbar auf die Düse oder unmittelbar auf den Faserrohling ausgeübt werden. Die optische Mikrostruktur am Faserende kann auch zur Fokussierung des austretenden oder eintretenden Lichts, oder zur Brechung, oder Ablenkung, oder zur erhöhten Reflexion ausgebildet sein.

Hergestellte Infrarotfasern werden im Anschluss in eine Polymer-Röhre mit hoher Steifigkeit, hoher Temperaturbeständigkeit, geringer Durchlässigkeit für Sauerstoff Feuchtigkeit und andere Umweltstoffe eingeführt und hermetisch abgeschlossen. Das Polymermaterial kann ein Poly-Ether-Ether-Kethon (PEEK) oder Teflon sein.

## Patentansprüche

1. Verfahren zum Herstellen eines metallhalogenidhaltigen Ausgangsmaterials für eine optische Faser, wobei das Ausgangsmaterial einen vorbestimmten Brechungsindex aufweist, mit den Schritten:
- Mischen halogenhaltiger Gase zu einem Gasgemisch mit einem Partialdruckverhältnis, das vom vorbestimmten Brechungsindex des Ausgangsmaterials abhängt,
- Herbeiführen einer chemischen Reaktion des Gasgemisches mit einem Metall zu mindestens einem Reaktionsprodukt bei einer ersten Temperatur oberhalb der Schmelztemperatur des Reaktionsproduktes und
- Abkühlen des Reaktionsproduktes auf eine zweite Temperatur unterhalb der Schmelztemperatur.

2. Verfahren nach Anspruch 1, **dadurch gekennzeichnet, dass** das Verfahren zum Herstellen einer festen Lösung von Metallhalogeniden ausgebildet ist.

3. Verfahren nach Anspruch 1 oder 2, **dadurch gekennzeichnet, dass** das Metall ein Alkalimetall oder Thallium oder Silber ist.

4. Verfahren nach Anspruch 3, **dadurch gekennzeichnet, dass** die feste Lösung Silberbromid und/oder Silberchlorid enthält.

5. Verfahren nach einem der Ansprüche 1 bis 4, **dadurch gekennzeichnet, dass** eines der halogenhaltigen Gase Brom enthält.

6. Verfahren nach einem der Ansprüche 1 bis 5, **dadurch gekennzeichnet, dass** eines der halogenhaltigen Gase Chlor enthält.

7. Verfahren nach einem der vorstehenden Ansprüche, **dadurch gekennzeichnet, dass** das Partialdruckverhältins so eingestellt ist, dass die feste Lösung Brom und Chlor in einem Teilchenzahl-Verhältnis von 3 zu 1 enthält.

8. Verfahren nach einem der vorstehenden Ansprüche, **gekennzeichnet durch** mindestens einen Schritt der Reinigung des Reaktionsproduktes vor dem Schritt des Abkühlens des Reaktionsproduktes auf die zweite Temperatur.

9. Verfahren nach einem der vorstehenden Ansprüche, **dadurch gekennzeichnet, dass** das Reaktionsprodukt beim Abkühlen von der ersten Temperatur auf die zweite Temperatur in einem Ofen entlang eines Temperaturgradienten geführt wird.

10. Verfahren zum Herstellen eines Rohlings für optische Fasern, mit den Schritten
- Bereitstellen eines Bades mit flüssigem Ausgangsmaterial,
- Rotieren eines teilweise in das Bad eingetauchten, festen Kerns derart, dass sich eine dünne Schicht des Ausgangsmaterials auf der Umfangsfläche des Kerns derart anlagert und dort kristallisiert, dass der feste Kern während des Rotierens in radialer Richtung wächst.

11. Verfahren nach Anspruch 10, **gekennzeichnet durch** einen Schritt des Austauschens des flüssigen Ausgangsmaterials in dem Bad während des Rotierens des Kerns.

12. Verfahren nach Anspruch 10 oder 11, **gekennzeichnet durch** einen kontinuierlichen Austausch flüssigen Ausgangsmaterials in dem Bad während des Rotierens des Kerns.

13. Verfahren nach einem der Ansprüche 10 bis 12, **dadurch gekennzeichnet, dass** die Rotationsachse parallel zur Oberfläche des flüssigen Ausgangsmaterials verläuft.

14. Verfahren nach einem der Ansprüche 10 bis 13, **dadurch gekennzeichnet, dass** der Abstand zwischen der Rotationsachse und der Oberfläche des flüssigen Ausgangsmaterials kontinuierlich vergrößert wird.

15. Verfahren nach Anspruch 14, **dadurch gekennzeichnet, dass** die Eintauchtiefe der Umfangsfläche des Kerns in das Bad konstant gehalten wird.

16. Verfahren zum Herstellen eines Rohlings für optische Fasern, mit folgenden Schritten
- Leiten mindestens eines flüssigen Ausgangsmaterials durch mindestens zwei Röhren unterschiedlichen Durchmessers, wobei eine erste Röhre mindestens eine zweite Röhre umgibt,
- Kontinuierliches Zusammenführen des Ausgangsmaterials nahe der Mündungsöffnung der zweiten Röhre in einer Diffusionszone und
- Überführen des Materials in der Diffusionszone in die feste Phase.

17. Verfahren nach Anspruch 16, **gekennzeichnet durch** den Schritt
- Leiten mindestens zweier flüssiger Ausgangsmaterialen, welche sich zumindest in der Konzentration ihrer Bestandteile unterscheiden, **durch** mindestens zwei Röhren unterschiedlichen Durchmessers, wobei eine erste Röhre mindestens eine zweite Röhre umgibt.

18. Verfahren nach Anspruch 16 oder 17, **dadurch gekennzeichnet, dass** die Ausgangsmaterialien bis zum Zusammenführen in der Diffusionszone ein Temperaturprofil in Längsrichtung der Röhren durchlaufen, derart, dass die Temperatur der Ausgangsmaterialien stromabwärts abnimmt und im Bereich der Mündung Schmelztemperatur erreicht.

19. Verfahren nach einem der Ansprüche 16 bis 18 , **dadurch gekennzeichnet, dass** die erste Röhre relativ zur zweiten Röhre bewegt wird derart, dass flüssiges Ausgangsmaterial stets in etwa gleichem Abstand von der Mündung der zweiten Röhre in die erste Röhre überführt wird.

20. Vorrichtung für ein Verfahren nach einem der Ansprüche 16 bis 19, umfassend mindestens zwei Röhren, von denen eine erste Röhre mindestens eine zweite Röhre zumindest im Bereich einer Stirnfläche der zweiten Röhre umgibt, und eine Heizvorrichtung, die zur Erzeugung eines Temperaturprofils in den Röhren ausgebildet ist, das in Längsrichtung der ersten Röhre veränderlich ist, **dadurch gekennzeichnet, dass** die genannte Stirnfläche einen Flächenabschnitt aufweist, dessen Oberflächennormale einen spitzen Winkel mit der Längsachse der zweiten Röhre bildet.

21. Vorrichtung nach Anspruch 20, **dadurch gekennzeichnet, dass** die Stirnfläche parallel zu einer im Betrieb der Vorrichtung sich mit Abstand vor der Röhrenmündung bildenden Phasengrenzfläche zwischen einer flüssigen und einer festen Phase verläuft.

22. Vorrichtung nach Anspruch 20 oder 21, **dadurch gekennzeichnet, dass** die Stirnfläche gekrümmt ist.

23. Vorrichtung nach Anspruch 22, **dadurch gekennzeichnet, dass** die Stirnfläche konvex gekrümmt ist.

24. Vorrichtung nach einem der Ansprüche 20 bis 23, **dadurch gekennzeichnet, dass** die erste Röhre längsverschieblich gelagert ist.

25. Vorrichtung nach einem der Ansprüche 20 bis 24, **dadurch gekennzeichnet, dass** innerhalb der ersten Röhre eine zweite Röhre konzentrisch mit der ersten verläuft, und mindestens eine weitere Röhre mit einem Abstand zur Längsachse der ersten und zweiten Röhre verläuft.

26. Verfahren zum Herstellen einer optischen Faser aus einem Rohling aus Rohlingsmaterial, bei dem das Rohlingmaterial durch eine Düse hindurch extrudiert wird, **dadurch gekennzeichnet, dass** die Düse in Vibration versetzt wird.

27. Verfahren nach Anspruch 26, **dadurch gekennzeichnet, dass** die Düse in Ultraschallvibration versetzt wird.

28. Extrusionsvorrichtung für ein Verfahren nach Anspruch 26, mit einem längsverschieblichen Stempel und einer Düse, **dadurch gekennzeichnet, dass** die Düse mit Mitteln zur Erzeugung von Vibrationen gekoppelt ist.

29. Extrusionsvorrichtung nach Anspruch 28, **dadurch gekennzeichnet, dass** die Mittel zur Erzeugung von Vibrationen einen Piezokristall enthalten.

30. Optische Faser mit einem Faserende, **gekennzeichnet durch** eine reflexionsmindernde Mikrostruktur am Faserende.

31. Optische Faser nach Anspruch 30, **dadurch gekennzeichnet, dass** die Mikrostruktur dem Fasermaterial aufgeprägt ist.

32. Optische Faser nach Anspruch 30 oder 31, **dadurch gekennzeichnet, dass** Mikrostruktur derart ausgebildet ist, dass zumindest ein Teil der am Faserende austretenden Strahlung gestreut wird.

33. Optische Faser nach einem der Ansprüche 30 bis 32, **gekennzeichnet durch** ein am Faserende befestigtes Element, das die Mikrostruktur aufweist.

34. Optische Faser nach einem der Ansprüche 30 bis 33, **dadurch gekennzeichnet, dass** das Element ein für bestimmte Wellenlängen durchlässiger Strahlungsfilter ist.

35. Optische Faser nach Anspruch 33 oder 34, **dadurch gekennzeichnet, dass** das Element gegen in seiner Umgebung vorhandene chemische Stoffe resistent ausgebildet ist.

36. Optische Faser nach einem der Ansprüche 33 bis 35, **dadurch gekennzeichnet, dass** das Element ein künstlicher Diamant ist.

37. Optische Faser
**gekennzeichnet durch** mehrere Lichtleiterkanäle, die die Faser im Inneren in deren Längsrichtung dergestalt durchlaufen, daß jeder Lichtleiterkanal geeignet ist, Licht im wesentlichen unbeeinflußt von den übrigen Lichtleiterkanälen **durch** die Faser zu leiten.
